# EUROPÄISCHE PATENTSCHRIFT

(11) **EP 2 784 376 B1**
(45) Veröffentlichungstag und Bekanntmachung des Hinweises auf die Patenterteilung: **23.12.2020**
(21) Anmeldenummer: 14161216.8
(22) Anmeldetag: 24.03.2014
(51) Int. Cl.: F21S 41/143, F21S 43/15, F21S 43/241, F21S 43/245, F21S 43/20, F21S 43/31, F21S 43/40, F21S 43/14, B60Q 1/26

(54) **Kraftfahrzeugleuchte für dynamische Leuchtenfunktionen**
Motor vehicle light for dynamic light functions
Lampe de véhicule automobile pour fonctions d'éclairage dynamiques

(30) Priorität: 27.03.2013 DE 102013205487
(43) Veröffentlichungstag der Anmeldung: 01.10.2014
(73) Patentinhaber: Automotive Lighting Reutlingen GmbH, 72762 Reutlingen (DE)
(72) Erfinder: Brendle, Matthias, 72074 Tübingen (DE)
(74) Vertreter: DREISS Patentanwälte PartG mbB

(56) Entgegenhaltungen:
- EP-A2- 2 280 215
- WO-A1-2006/054225
- CN-A- 1 948 821
- DE-A1-102004 008 296
- DE-A1-102007 008 994
- DE-A1-102007 017 072
- DE-A1-102008 013 603
- DE-A1-102008 027 320
- DE-A1-102011 077 636
- JP-A- 2012 256 491
- US-A1- 2011 038 168

## Beschreibung

Die Erfindung betrifft eine Kraftfahrzeugleuchte nach dem Oberbegriff des Anspruchs 1. Eine solche Kraftfahrzeugleuchte besitzt mehrere Lichtquellen, deren Lichtströme unabhängig voneinander aufsteuerbar und absteuerbar sind, und eine Optik, die dazu eingerichtet ist, aus den gemeinsam aufgesteuerten Lichtströmen der Lichtquellen eine regelkonforme Lichtverteilung zu erzeugen.

Unter einer Leuchte wird dabei eine Beleuchtungseinrichtung verstanden, die dazu dient, anderen Verkehrsteilnehmern die Anwesenheit und/oder das Bewegungsverhalten eines Kraftfahrzeuges zu signalisieren. Im Unterschied dazu dienen Scheinwerfer zur aktiven Beleuchtung der Fahrzeugumgebung, um dem Fahrer Hindernisse sichtbar zu machen, die sich im Fahrweg befinden. Um regelkonform zu sein, müssen diese Leuchten bestimmte Lichtstärken in vorgegebenen Winkelbereichen erzeugen, die eine Hauptabstrahlrichtung umgeben. Leuchten mit den eingangs genannten Merkmalen sind per se bekannt. Als Beispiel wird auf die : gattungsgemäße DE 10 2010 012 747 A1 verwiesen. Als Beispiel für einen Scheinwerfer wird auf die DE 2010 2008 013 603 A1 verwiesen, die einen sogenannten Matrixscheinwerfer zeigt. Die US 2011/0038168 A1 zeigt ein lamp assembly für einen Scheinwerfer.

In letzter Zeit werden von den Fahrzeugherstellern zunehmend Fahrzeugleuchten nachgefragt, deren Erscheinungsbild, wie es sich bei aufgesteuerten Lichtströmen ergibt, dynamisch verändert werden kann. Während im Normalbetrieb ein homogen helles Erscheinungsbild der Leuchte gewünscht wird, soll ein Lichtschwerpunkt (also zum Beispiel ein heller Fleck) beispielsweise beim Auf- oder Zuschließen des Fahrzeugs für kurze Zeit über die Leuchtenfläche wischen. Unter dem Normalbetrieb wird dabei der Betrieb verstanden, in dem die Leuchte eine regelkonforme Lichtverteilung erzeugt, um damit eine Lichtfunktion zu erfüllen. Unter einer Lichtfunktion wird hier allgemein das Erzeugen einer bestimmten Lichtverteilung verstanden. Beispiele solche Lichtverteilungen sind Tagfahrlicht-Lichtverteilungen, Bremslicht-Lichtverteilungen und Blinklicht-Lichtverteilungen, ohne dass diese Liste als abschließend verstanden werden soll.

Der Herausforderung des Bereitstellens eines dynamisch veränderlichen Erscheinungsbildes begegnet man in der Regel damit, dass man das Erscheinungsbild der Lichtfunktion, wie es sich einem Betrachter der eingeschalteten Leuchte bietet, mit vielen räumlich hinter der Lichtaustrittsfläche verteilten Lichtquellen nachbildet. Diese Lichtquellen werden einzeln angesteuert, so dass sich in Abhängigkeit von der Ansteuerung der jeweiligen Lichtquellen zeitlich und räumlich unterschiedliche Leuchtdichten der Lichtaustrittsfläche realisieren lassen. Unter einer Ansteuerung wird hier sowohl eine Aufsteuerung (gesteuerte Vergrößerung) des Lichtstroms als auch eine Absteuerung (gesteuerte Verringerung) des Lichtstroms verstanden.

Es liegt auf der Hand, dass die räumliche Positionierung von so vielen einzelnen Lichtquellen und Vorsatzoptiken sowie die Kontaktierung dieser Lichtquellen über großflächige Flexboard-Leiterplatten einen erheblichen Aufwand erfordern. Aus den genannten Gründen ist diese Leuchten-Bauart aufwändig herzustellen und damit unerwünscht teuer.

Darüber hinaus gibt es eine Vielzahl an Leuchtenbauarten, die mit Reflektoren und Lichtleitern eine gewünschte Lichtverteilung aus dem Lichtstrom einer einzelnen Lichtquelle erzeugen. Ersetzt man in diesen Leuchten die einzelne Lichtquelle durch ein Array aus vielen Lichtquellen und versucht man nun, durch Variation der Ansteuerung der jeweiligen Lichtquellen das Erscheinungsbild der Leuchte zu verändern, wird man feststellen, dass dies nicht oder nur in sehr geringem Maße möglich ist. Dies liegt daran, dass bei konventionellen Leuchtenkonstruktionen jede einzelne dieser Lichtquellen weitgehend die gesamte Leuchtenfläche ausleuchtet, so dass sich das Erscheinungsbild der Leuchte durch ein verändertes Ansteuermuster der Lichtquellen kaum beeinflussen lässt. Ein geändertes Ansteuermuster ergibt sich zum Beispiel dann, wenn von zwei benachbarten Lichtquellen zunächst nur die eine und dann nur die andere eingeschaltet wird.

Bei der eingangs genannten DE 10 2010 012 747 A1 sind alle Primäroptiken und Sekundäroptiken gleich orientiert. Ihre optischen Achsen sind parallel. Daher müssen dort die Lichtquellen und Optiken entlang der Lichtaustrittsfläche aufgereiht werden, um ein zusammenhängendes Signalbild zu erzeugen. Dies hat eine aufwändige und teure Leuchtenkonstruktion zur Folge. Da die jeweiligen Lichtbündel die Primäroptiken in gleicher Richtung verlassen und die jeweils einzeln mit einem solchen Bündel aus gleicher Richtung ausgeleuchteten Sekundäroptiken untereinander gleich sind, werden sämtliche Lichtbündel an den Sekundäroptiken in gleicher Weise gestreut, beziehungsweise gebrochen. Sie überlagern sich damit gewissermaßen übereinander zu einer Lichtverteilung, in der sich die von den einzelnen Lichtbündeln an einem Ort erzeugten Intensitäten addieren. Anders als in der im Leuchtenvorfeld resultierenden Lichtverteilung ergeben sich im Erscheinungsbild der Leuchte und/oder der Sekundäroptik scharf voneinander abgegrenzte Bereiche, die sich nicht überlappen. Auf diese Weise sind sehr viele Segmente, respektive Lichtquellen erforderlich, um einen weichen, wischenden Effekt eines über die Lichtaustrittsfläche laufenden Lichtflecks zu erzielen.

Häufig wird auch ein bandförmiges Erscheinungsbild der eingeschalteten Leuchte gefordert, wobei die bandförmige Lichtaustrittsfläche mit lichtemittierenden Dioden (LED) und dazugehörigen Vorsatzoptiken beleuchtet wird. Die Lichtaustrittsfläche weist bei den gewünschten Lichtbandformen eine Länge auf, die ein Vielfaches der Breite der Lichtaustrittsfläche beträgt. Lichtaustrittsflächen üblicher Vorsatzoptiken weisen jedoch ein Verhältnis von Länge zu Breite von ungefähr zwei zu eins auf. Somit erfordert die homogene Ausleuchtung der Lichtbänder eine Vielzahl an Lichtquellen und dazugehörigen Vorsatzoptiken.

Die räumliche Anordnung von vielen einzelnen Lichtquellen und Vorsatzoptiken sowie die Versorgung dieser Lichtquellen mit elektrischer Energie und mit Steuersignalen mittels großflächiger Leiterplatten erfordert einen erheblichen konstruktiven Aufwand. Dadurch werden Leuchten dieser Bauart teuer und damit unwirtschaftlich.

Vor diesem Hintergrund besteht die Aufgabe der Erfindung in der Angabe einer Leuchte der eingangs genannten Art, die eine dynamische Veränderung des Erscheinungsbildes der Leuchte mit einem verringerten Aufwand erlaubt.

Diese Aufgabe wird mit den Merkmalen des Anspruchs 1 gelöst. Die vorliegende Erfindung unterscheidet sich von dem eingangs genannten Stand der Technik dadurch, dass die Optik wenigstens eine Primäroptik und eine Sekundäroptik aufweist, wobei die Primäroptik dazu eingerichtet ist, mit einem Lichtstrom einer ersten Lichtquelle der mehreren Lichtquellen einen anderen Teilbereich der Sekundäroptik auszuleuchten als mit einer zweiten Lichtquelle der mehreren Lichtquellen, wobei die Lichtquellen und die wenigstens eine Primäroptik dazu eingerichtet und angeordnet sind, dass sie unterschiedlich orientierte, insbesondere voneinander verschiedene Hauptabstrahlrichtungen aufweisende Lichtbündel erzeugen, die voneinander verschiedene, sich paarweise überlappende Bereiche der Sekundäroptik ausleuchten, wobei die Brennweite der Sekundäroptik größer als die Brennweite der Primäroptik ist, der Abstand der Primäroptik von der Sekundäroptik geringer als die Brennweite der Sekundäroptik ist, die Lichtquelle zwischen der Primäroptik und deren objektseitigen Brennpunkt platziert ist so dass folglich ein virtuelles Lichtquellenbild entsteht und wobei die Sekundäroptik auf das virtuelle Lichtquellenbild fokussiert ist.

Ein Vorteil der Erfindung ist, dass die Leuchte relativ einfach aufgebaut ist. Ein geringer konstruktiver Aufwand macht die Leuchte kostengünstig herstellbar.

Ein Vorteil gegenüber der DE 10 2010 012 747 A1 besteht darin, dass bereits sehr wenige Lichtquellen, bevorzugt nur zwei oder drei Lichtquellen, erforderlich sind, um einen weichen, wischenden Effekt eines sich auf der Lichtaustrittsfläche der Sekundäroptik und/oder Leuchte bewegenden Lichtflecks zu erzielen. Dies ergibt sich daraus, dass die von den einzelnen Lichtquellen ausgeleuchteten Bereiche der Sekundäroptik unscharf begrenzt sind und sich gegenseitig überlappen. Der konstruktive und bauliche Aufwand ist damit vergleichsweise gering.

Durch die Trennung der Optik in eine Primäroptik und eine Sekundäroptik, wobei die Primäroptik dazu eingerichtet ist, mit einem Lichtstrom einer ersten Lichtquelle der mehreren Lichtquellen einen anderen Teilbereich der Sekundäroptik auszuleuchten als mit einer zweiten Lichtquelle der mehreren Lichtquellen, werden die folgenden Vorteile erzielt:
Mit den unterschiedlichen Lichtquellen lassen sich auch dann unterschiedliche Bereiche der Sekundäroptik ausleuchten, wenn die Lichtquellen räumlich sehr nahe beieinander liegen. Das hat den Vorteil, dass das Erscheinungsbild der Leuchte nicht sehr stark vom Betrachtungswinkel abhängt, was unerwünscht wäre. Dadurch, dass die Lichtquellen sehr nahe beieinander liegen können, ist es möglich, sie auf einer preiswerten starren und ebenen Platine anzuordnen und zu kontaktieren, was wesentlich weniger Kosten verursacht als eine Anordnung und Kontaktierung auf einer flexiblen, dreidimensional krümmbaren Leiterplatte.

Die gewissermaßen zweistufige Optik erlaubt es, auch kompliziert geformte Lichtaustrittsflächen mit auf einer ebenen und starren Platine angeordneten und kontaktierten Lichtquellen auszuleuchten. Die zweistufige Optik erlaubt es ferner, die gewünschte Leuchtenfläche im regulären Betrieb durch eine gleichmäßige Ansteuerung aller Lichtquellen homogen auszuleuchten, so dass sich eine über der Lichtaustrittsfläche erwünscht konstante Leuchtdichte ergibt.

Darüber hinaus erlaubt es die Erfindung, dass die einzelnen Lichtquellen verschiedene, aneinandergrenzende oder sich überlappende Bereiche der Lichtaustrittsfläche ausleuchten, so dass durch unterschiedliche Ansteuerung der jeweiligen Lichtquellen lokal unterschiedliche Leuchtdichten und damit zeitlich veränderliche Leuchtdichtemuster auf der Lichtaustrittsfläche der Leuchte erzeugt werden können.

Durch Variation der Ansteuerung kann die lokal unterschiedliche Leuchtdichte, die sich zum Beispiel als heller Fleck oder Balken darstellt, in einer Bewegung, die einer Wischbewegung ähnlich ist, über die Lichtaustrittsfläche bewegt werden.

Darüber hinaus lassen sich die einzeln ausgeleuchteten Bereiche durch die zweistufige Optik in Bezug auf ihre Höhe (d.h. im Vergleich zu ihrer Höhe) sehr breit ausführen. Daraus resultieren zwei Vorteile. Man kann einerseits bereits mit wenigen Lichtquellen eine homogene Ausleuchtung über eine vergleichsweise große Länge erzielen, wenn alle Lichtquellen gleichzeitig eingeschaltet sind. Andererseits kann man leicht einen wischenden Effekt erreichen, wenn man die Lichtquellen wie bei einem Lauflicht nacheinander einschaltet und ausschaltet.

Im Vergleich dazu entspricht das Seitenverhältnis der Breite zur Höhe der Lichtaustrittsfläche einer herkömmlichen einstufigen Vorsatzoptik von Leuchtdioden ungefähr dem Wert 2. Um die meist gewünschten langgezogenen Lichtbänder mit großer Breite und geringer Höhe homogen auszuleuchten, sind daher sehr viele LEDs mit sehr vielen Vorsatzoptiken erforderlich.

Primäroptik und Sekundäroptik bilden zusammen eine zweistufige Optik, die es ermöglicht, dass sich die den jeweiligen Lichtquellen zugeordneten Zonen überlagern. Dadurch sind bei einem dynamisch veränderlichen Erscheinungsbild die Übergänge zwischen helleren und dunkleren Bereichen fließend. Der Vorteil liegt darin, dass bereits mit wenigen Lichtquellen ein besonders weicher wischender Effekt erzielt wird. Das heißt, es sind für einen Betrachter keine, scharf voneinander abgegrenzte helle und dunkle Bereiche die über die über die Lichtaustrittsfläche wandern, sichtbar.

Die Primäroptiken können relativ zueinander und in Bezug zur Sekundäroptik so angeordnet sein, dass eine Lichtaustrittsfläche der Leuchte entlang ihrer größten Ausdehnung in ungefähr gleich breite Zonen unterteilt wird. Zu jeder Zone der Lichtaustrittsfläche der Leuchte gehört eine Zone der Lichtaustrittsfläche der Sekundäroptik, sei es eine reflektierende Fläche oder eine lichtbrechende Fläche. Durch jede Zone tritt ein Lichtbündel aus, das für sich allein bereits den Winkelbereich einer regelkonformen Lichtverteilung ausleuchtet und dabei eine Teilintensität (Teilhelligkeit) erzeugt. Die sich insgesamt einstellende Intensität oder Helligkeit ergibt sich dann als Summe der Intensitäten, die von den aus verschiedenen Zonen austretenden Lichtbündeln erzeugt werden. Mit anderen Worten: Die Lichtbündel beleuchten alle einen Winkelbereich, der für alle Lichtbündel weitgehend gleich ist. Die Lichtverteilungen der einzelnen Lichtbündel überlagern sich daher weitgehend an demselben Ort. Sie liegen gewissermaßen übereinander. Als erwünschte Folge hängt das Erscheinungsbild der Leuchte dann nicht sehr stark vom Betrachtungswinkel ab. Abgesehen von möglichen Ausnahmen an den Rändern der Lichtverteilung gilt, dass jeder Punkt der Lichtverteilung mit Licht von jeder Lichtquelle beleuchtet wird. Dies ermöglicht einerseits die Verwirklichung der Wischeffekte.

Darüber hinaus stellt dies andererseits einen fundamentalen Unterschied zu einem Matrixscheinwerfer dar, dessen Lichtverteilung sich gewissermaßen aus nebeneinander liegenden Teillichtverteilungen puzzleartig zusammensetzt, wobei die sich letztlich einstellende Intensität an jeweils einem Punkt durch ein einziges, eng begrenztes Lichtbündel erzeugt wird. In diesem Fall hängt das Erscheinungsbild stark vom Betrachtungswinkel ab. Die Lichtbündel der einzelnen Lichtquellen verlassen die Sekundäroptik unter verschiedenen Winkeln und erzeugen so nebeneinanderliegende und voneinander abgegrenzte helle oder dunkle Bereiche, je nachdem, ob die zugehörige Lichtquelle eingeschaltet ist oder nicht eingeschaltet ist. Hält sich ein Betrachter in einem hellen Bereich auf (dessen Lichtquelle also eingeschaltet ist), so sieht er die Sekundäroptik vollständig erleuchtet. Ist die Lichtquelle, die den Teilbereich beleuchtet, in dem sich der Betrachter gerade aufhält dagegen ausgeschaltet, so erscheint die Sekundäroptik dem Betrachter vollständig dunkel. Dies gilt auch für den Fall, dass Lichtquellen, die benachbarte Teilbereiche erleuchten, eingeschaltet sind.

Bei der vorliegenden Erfindung werden mehrere dicht nebeneinander angeordnete Lichtquellen verwendet, die mit einer oder mehreren Primäroptiken unterschiedlich orientierte, insbesondere voneinander verschiedene Hauptabstrahlrichtungen aufweisende Lichtbündel erzeugen, die voneinander verschiedene, vorzugsweise unscharf voneinander abgegrenzte Bereiche der Sekundäroptik ausleuchten. Die Sekundäroptik ist bevorzugt dazu eingerichtet, die unterschiedlich orientierten Lichtbündel so umzulenken, dass sie die Sekundäroptik in gleicher Richtung verlassen und jeweils überwiegend gleiche, sich überlagernde Lichtverteilungen zu erzeugen. Da alle Sekundäroptikbereiche, respektive Zonen, überwiegende gleiche Lichtverteilungen erzeugen, kann der sich im Überlagerungsbereich aufhaltende Betrachter alle Sekundäroptikbereiche (Zonen) leuchten sehen, wobei der Helligkeitseindruck der einzelnen Bereiche von der Bestromung der diese Bereiche/Zonen beleuchtenden Lichtquellen abhängig ist.

Die Sekundäroptik ist dazu eingerichtet, den auf sie auftreffenden Lichtstrom in eine in einem Vorfeld des Kraftfahrzeugs liegende Lichtverteilung zu überführen.

Eine bevorzugte Ausgestaltung der Erfindung zeichnet sich dadurch aus, dass den mehreren Lichtquellen eine gemeinsame Primäroptik zugeordnet ist.

Die Zuordnung einer gemeinsamen Primäroptik für alle der mehreren Lichtquellen ist eine besonders einfache und kostengünstige Lösung, die wenig Bauraum beansprucht und die bei der Montage keine Justierung von Primäroptiken relativ zueinander erfordert.

Eine weitere bevorzugte Ausgestaltung der Erfindung zeichnet sich dadurch aus, dass jeder einzelnen der mehreren Lichtquellen eine eigene Primäroptik zugeordnet ist, die das von der jeweiligen Lichtquelle ausgehende Lichtbündel kollimiert und in eine jeweilige Zone der Sekundäroptik lenkt.

Von der Lichtquelle ausgehendes Licht wird von der Primäroptik besonders gut kollimiert, wenn die Lichtquelle in einem Brennpunkt oder nahe des Brennpunktes der Primäroptik angeordnet ist. Verfügt die Leuchte über mehrere Lichtquellen, ist es meist nicht möglich, alle Lichtquellen im Brennpunkt der Primäroptik anzuordnen. Diese Ausgestaltung hat den Vorteil, dass jede Lichtquelle im Brennpunkt der ihr zugeordneten Primäroptik angeordnet werden kann, so dass von der Lichtquelle ausgehendes Licht optimal gebündelt und in die der jeweiligen Lichtquelle zugeordnete Zone der Sekundäroptik gerichtet werden kann. Es ist auch möglich, individuelle Primäroptiken als Abschnitte eines einstückig stoffschlüssig zusammenhängenden Bauteils bereitzustellen, was die Vorteile der beiden Ausgestaltungen miteinander verbindet. Die individuellen Primäroptiken sind dabei zum Beispiel Abschnitte eines zusammenhängenden Spritzgussteils.

Bevorzugt ist auch, dass die Primäroptik als Fresnel-Linse ausgeführt ist.

Die Fresnel-Linse hat den Vorteil, dass sie wesentlich dünner ist, als eine Sammellinse, die die gleiche Brennweite besitzt wie die Fresnel-Linse. Dadurch sind Gewicht und Abmessungen der Leuchte reduziert.

Eine bevorzugte Ausgestaltung der Erfindung zeichnet sich dadurch aus, dass jeder der Lichtquellen eine eigene Primäroptik zugeordnet ist, die als Lichtleiter ausgeführt ist.

Lichtleiter weisen als Transportflächen dienende Grenzflächen auf, die dazu geeignet sind, das auf sie auftreffende Licht durch Totalreflexion zu transportieren. Die Grenzflächen sind bevorzugt so gestaltet, dass das Licht parallelisiert und in die der Lichtquelle zugeordnete Zone der Sekundäroptik gelenkt wird. Eine Parallelisierung, oder besser, eine Verringerung des Öffnungswinkels des Lichtbündels, das sich in einem Lichtleiter ausbreitet, erfolgt dann, wenn der Lichtleiter einen Querschnitt aufweist, der sich in der Lichtausbreitungsrichtung zu einer Lichtaustrittsfläche hin kontinuierlich erweitert. Durch die Verwendung eines Lichtleiters als Primäroptik wird es möglich, eine Hauptaustrittsrichtung der Lichtquellen in nahezu beliebiger Lage bezüglich einer Lichtaustrittsrichtung der Leuchte zu wählen.

Eine bevorzugte Ausgestaltung der erfindungsgemäßen Leuchte zeichnet sich dadurch aus, dass die Sekundäroptik als Reflexionsoptik ausgeführt ist.

Die Reflexionsoptik ist zum Beispiel als Umlenkspiegel gestaltet, der das auf ihn auftreffende Licht in eine Austrittsrichtung der Leuchte lenkt. Sofern das von der Primäroptik kommende Licht noch einen unerwünscht großen Öffnungswinkel besitzt, ist die Reflexionsoptik bevorzugt als sammelnde Optik, beispielsweise als Hohlspiegel ausgeführt.

Bevorzugt ist auch, dass die Sekundäroptik Facetten aufweist.

Die Facetten sind in Austrittsrichtung gegeneinander so versetzt, dass für jede Facette der Abstand zu der Lichtquelle von der sie beleuchtet wird, gleich dem Abstand einer anderen Facette von der diese andere Facette beleuchtenden Lichtquelle ist. Dadurch werden die Lichtwege für alle von den Lichtquellen ausgehenden Lichtbündel annähernd gleich, was zu der gewünschten Homogenität der Helligkeit der Lichtaustrittsfläche beiträgt.

Eine weitere bevorzugte Ausgestaltung der erfindungsgemäßen Leuchte zeichnet sich dadurch aus, dass die Sekundäroptik als Sammellinse ausgeführt ist.

Die Sammellinse kann zum Beispiel als glatte, konkav-konvexe Linse verwirklicht sein.

Bevorzugt ist auch, dass die Sekundäroptik als Fresnel-Linse ausgeführt ist.

Die Fresnel-Linse weist bei gleicher Brennweite eine wesentliche geringere Dicke auf, als eine glatte Sammellinse. Dadurch wird die Sekundäroptik kleiner und leichter.

Ferner ist bevorzugt, dass die Fresnel-Linse gewölbt ausgeführt ist, wobei die Sekundäroptik von der Lichtquelle aus gesehen bevorzugt eine konkave Form aufweist. Dadurch wird erreicht, dass die Lichtweglänge für Licht, das eine Zone beleuchtet, die in einem großen Abstand von der optischen Achse liegt, annähernd gleich groß ist wie die Lichtweglänge von Licht, das eine Zone beleuchtet, die nahe an der optischen Achse liegt.

Außerdem ist bevorzugt, dass die Sekundäroptik als Fresnel-Linse ausgeführt ist, die doppelte Prismen aufweist.

Lichtstrahlen werden beim Eintritt in das doppelte Prisma über eine erste Seitenfläche gebrochen und treffen auf eine interne Grenzfläche, an der sie eine in Richtung einer zweiten Seitenfläche umlenkende interne Totalreflexion erfahren. Durch die zweite Seitenfläche treten sie im Wesentlichen parallel zur optischen Achse aus. Durch die interne Totalreflexion, die bei einfachen Prismen nicht auftritt, können mit den doppelten Prismen größere Richtungsänderungen erzeugt werden. Die einfachen Prismen ändern die Lichtrichtung nur durch beim Eintritt in das Prisma und beim Austritt aus dem Prisma erfolgende Brechung. Die doppelten Prismen sind bevorzugt in den Randbereichen der Linse angeordnet, so dass dort auftreffendes Licht noch in Austrittsrichtung gelenkt wird und zur Erzeugung einer regelkonformen Lichtverteilung genutzt wird. Auf diese Weise wird das Licht der Lichtquellen effizienter genutzt.

Eine weitere Ausgestaltung der Erfindung zeichnet sich dadurch aus, dass die Primäroptik und die Sekundäroptik als Reflexionsoptiken ausgeführt sind. Dabei können die Primäroptik und die Sekundäroptik kostengünstig als einstückiges Bauteil hergestellt werden. Sind die Primäroptik und die Sekundäroptik beispielsweise als Spiegel ausgeführt, ist das einstückige Bauteil ein Kunststoffteil, das mit einer reflektierenden Metallschicht versehen ist. Dadurch ist die zweistufige Optik ein leichtes Bauteil das bei Verwendung im Kraftfahrzeug einen kraftstoffsparenden Effekt herbeiführt.

Eine weitere Ausgestaltung der Erfindung zeichnet sich dadurch aus, dass die Primäroptik und die Sekundäroptik als Lichtleiter ausgeführt sind. Dadurch können Primäroptik und Sekundäroptik in einem einstückigen transparenten Festkörper zusammengefasst sein.

Übliche Materialien für diese transparenten Festkörper sind organische Gläser wie Polymethylmethacrylat (PMMA) oder Polycarbonat (PC). Diese Materialien haben gegenüber mineralischen Gläsern den Vorteil, dass sie leichter sind. Bauteile aus PMMA oder PC sind einfach und kostengünstig durch Spritzgussverfahren herstellbar.

Weiterhin wird vorgeschlagen, dass eine in Hauptabstrahlrichtung weisende Oberfläche der Sekundäroptik torische oder toroide Spiegelflächen aufweist, die dazu eingerichtet sind, das Licht, das von der Oberfläche reflektiert wird einer regelkonformen Lichtverteilung entsprechend umzulenken. Die Spiegelflächen lenken das Licht vorzugsweise horizontal zur Fahrtrichtung ungefähr doppelt so stark um wie vertikal zur Fahrtrichtung, um die Öffnungswinkel des Lichtbündel in einem für eine regelkonforme Lichtverteilung erforderlichen Maß aufzuweiten.

Eine fertigungstechnisch einfache Lösung ist es, dass in einem Strahlengang nach der Sekundäroptik eine Streuoptik angeordnet ist. Die Streuoptik weist auf eine in Hauptabstrahlrichtung liegenden Vorderseite und/oder einer entgegen der Hauptabstrahlrichtung liegenden Rückseite beispielsweise Linsen auf, die als halbkreisförmige Zylinder ausgeführt sind. Die Achsen dieser sogenannten Zylinderlinsen liegen dabei im Wesentlichen vertikal oder horizontal zur Fahrtrichtung. Die Mantelflächen der Zylinderlinsen können dabei hintereinander, jeweils auf der Vorderseite und auf der Rückseite der Streuscheibe oder nebeneinander, auf der Vorderseite oder der Rückseite der Streuscheibe angeordnet sein.

Denkbar ist es auch, die Streuoptik als transparenten Festkörper auszuführen. Der Festkörper weist eine Lichteintrittsfläche, eine Lichtaustrittsfläche und wenigstens eine totalreflektierenden Seitenfläche auf, die sich in einem von der Sekundäroptik ausgehenden Strahlengang befinden. Die Seitenfläche des Festkörpers ist dazu geeignet, das von der Sekundäroptik ausgehende Licht gemäß den gesetzlichen Vorgaben zu lenken.

Dabei ist es denkbar, dass die Seitenfläche eine streuende Struktur aufweist. Als streuende Struktur kommen beispielsweise Kegel, Prismen oder lokale Aufrauhungen in Frage. Die streuende Struktur kann auch in Form einer Lackierung aufgebracht werden, bei der beispielsweise kleine Glaskörper im Lack als Streukörper dienen.

Weiterhin wird vorgeschlagen, dass die Leuchte mehrere verschiedenfarbige Lichtquellen umfasst. Die Lichtquellen können beispielsweise als rotes, gelbes oder weißes Licht emittierende Leuchtdioden ausgeführt sein. Damit kann beispielsweise ein Tagfahrlicht (weiß, kontinuierlich leuchtend) und ein Richtungsanzeiger (gelb, blinkend) mit derselben Leuchte dargestellt werden.

**Erfindungsgemäß ist die Brennweite der Sekundäroptik größer als die Brennweite der Primäroptik.** In einer besonders bevorzugten Ausgestaltung ist die Brennweite der Sekundäroptik um einen zwischen den Werten 5 und 20 liegenden Faktor größer als die Brennweite der Primäroptik.

Die größere Brennweite der Sekundäroptik bewirkt, dass das Licht der einzelnen Lichtquellen in die unterschiedlichen Sekundäroptik-Zonen gelenkt werden kann, ohne dass dadurch große Winkelverschiebungen zwischen den von den einzelnen Lichtquellen ausgehenden Lichtbündeln entstehen. Mit anderen Worten: Je größer die Brennweite der Sekundäroptik ist, desto stärker überlappen sich die Lichtverteilungen, die von den einzelnen Lichtquellen durch die verschiedenen Zonen der Sekundäroptik geschickt werden. Das wischende Erscheinungsbild kann nur im Überlappungsbereich der Lichtverteilungen vollständig wahrgenommen werden.

**Erfindungsgemäß ist der Abstand der Primäroptik von der Sekundäroptik geringer als die Brennweite der Sekundäroptik.**

Um die Baulänge des optischen Systems zu begrenzen bzw. um bei gegebener Baulänge eine Sekundäroptik mit großer Brennweite verwenden zu können, ist **die Sekundäroptik nicht auf ein reelles Lichtquellenbild der Primäroptik fokussiert, sondern ist erfindungsgemäß auf ein virtuelles Lichtquellenbild fokussiert. Dieses virtuelle Bild entsteht, wenn die Lichtquelle zwischen der Primäroptik und deren objektseitigen Brennpunkt platziert wird.** Man erhält dann ein aufrechtes, virtuelles Bild hinter der Lichtquelle, so, als ob man die Lichtquelle durch ein Vergrößerungsglas betrachtet. Es ergibt sich in der Richtung des Lichtes die folgende Reihenfolge: virtuelles Bild, Lichtquelle, Primäroptik, Sekundäroptik.

Fokussiert die Sekundäroptik nun auf das hinter der Lichtquelle liegende vergrößerte virtuelle Lichtquellenbild, müssen folglich die Lichtquelle und ihre Primäroptik zwischen der Sekundäroptik und deren objektseitigen Brennpunkt liegen.

**Die Primäroptik ist bevorzugt zur Lichtquelle derart angeordnet, dass die Primäroptiken sich überlappende virtuelle Bilder der Lichtquelle erzeugen.**

Die Überlappung hat zur Folge, dass sich die Strahlengänge der einzelnen Lichtquellen auf der Sekundäroptik ebenfalls überlappen können, was bevorzugt wird, um abwechselnd helle und dunkle Bereiche im Erscheinungsbild der Leuchte zu vermeiden. Da jeder infinitesimal kleine Bereich der Primäroptik eine Abbildung der Lichtquellenanordnung liefert, überlappen sich die Lichtquellenbilder aus einem solchen kleinen Bereich zunächst nicht. Die Überlappung kann aber durch drei Maßnahmen erreicht werden, die einzeln oder in beliebige Kombination miteinander verwendet werden können.

Eine Überlappung wird in einer Ausgestaltung durch eine unscharfe Abbildung erzeugt. Dabei fokussiert die Sekundäroptik nicht exakt auf das virtuelle Bild der Lichtquellen, sondern ein wenig davor oder dahinter. Eine weitere Möglichkeit, eine Überlappung zu erzeugen, besteht in einer unterschiedlichen Orientierung und mit unterschiedlichen Maßstäben erfolgenden Abbildung der Lichtquellenbilder. Dies geschieht bei Halbschalenreflektoren meist automatisch, da hier in der Regel große Unterschiede in den partiellen Schnittweiten, also in den Abständen zwischen der Lichtquelle und der Reflexionsfläche des Reflektors auftreten.

Eine besonders bevorzugte Ausgestaltung sieht eine Streugeometrie auf der Primäroptik vor (Zylinder- oder Kissenoptik), mit der die Lichtquellenbilder gezielt gegeneinander verschoben werden so dass die gewünschte Überlappung entsteht. Die Streugeometrie ist natürlich die unempfindlichste und beste Maßnahme, um die Überlappung der Lichtquellenbilder zu steuern und ein homogenes Erscheinungsbild auf der Sekundäroptik zu erreichen.

Zum besseren Verständnis wird noch darauf hingewiesen, dass die Erfindung gerade nicht eine Projektionsoptik verwendet, wie sie zum Beispiel bei Scheinwerfern verwendet wird, um eine scharfe Hell-Dunkel-Grenze zu erzeugen. Bei einer von Scheinwerfer bekannten Projektionsoptik besitzt die Primäroptik einen ersten, Lichtquellen-seitigen Brennpunkt und einen zweiten Brennpunkt, welcher auf der Seite der Primäroptik liegt, welche der Sekundäroptik zugewandt ist. Die Primäroptik bildet die Lichtquelle im zweiten Brennpunkt ab, wobei das Bild dort durch eine Blende begrenzt wird. Die Sekundäroptik ist auf die Blende fokussiert und bildet diese als scharfe Hell-Dunkel-Grenze ab. Der Abstand zwischen der Primäroptik und der Sekundäroptik entspricht daher der Summe der zwischen ihnen liegenden Brennweiten, was eine (eher nachteilig) große Baulänge zur Folge hat.

Weitere Vorteile ergeben sich aus den abhängigen Ansprüchen, der Beschreibung und den beigefügten Figuren.

Es versteht sich, dass die vorstehend genannten und nicht nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Dabei zeigen jeweils in schematischer Form:
- Figur 1: eine erste Ausgestaltung einer Kraftfahrzeugleuchte in einer Schnittdarstellung;
- Figur 2: eine zweite Ausgestaltung der Kraftfahrzeugleuchte in einer Schnittdarstellung;
- Figur 3: ein Detail einer Sekundäroptik;
- Figur 4: eine dritte Ausgestaltung der Kraftfahrzeugleuchte in einer Schnittdarstellung;
- Figur 5: eine vierte Ausgestaltung der Kraftfahrzeugleuchte in einer Schnittdarstellung;
- Figur 6: eine fünfte Ausgestaltung der Kraftfahrzeugleuchte in einer Schnittdarstellung;
- Figur 7: eine sechste Ausgestaltung der Kraftfahrzeugleuchte in einer Schnittdarstellung;
- Figur 8: die sechste Ausgestaltung der Kraftfahrzeugleuchte in einer anderen Schnittebene;
- Figur 9: eine siebte Ausgestaltung der Kraftfahrzeugleuchte in einer Schnittdarstellung;
- Figur 10: eine achte Ausgestaltung der Kraftfahrzeugleuchte in einer Schnittdarstellung;
- Figur 11: eine neunte Ausgestaltung der Kraftfahrzeugleuchte in einer Schnittdarstellung;
- Figur 12: eine Leuchtdichteverteilung für nichtüberlappende Zonen;
- Figur 13: eine Leuchtdichteverteilung für vollständig überlappende Zonen; und
- Figur 14: eine Leuchtdichteverteilung für teilweise überlappende Zonen.

Dabei bezeichnen gleiche Bezugszeichen in verschiedenen Figuren jeweils gleiche oder zumindest ihrer Funktion nach gleiche Elemente.

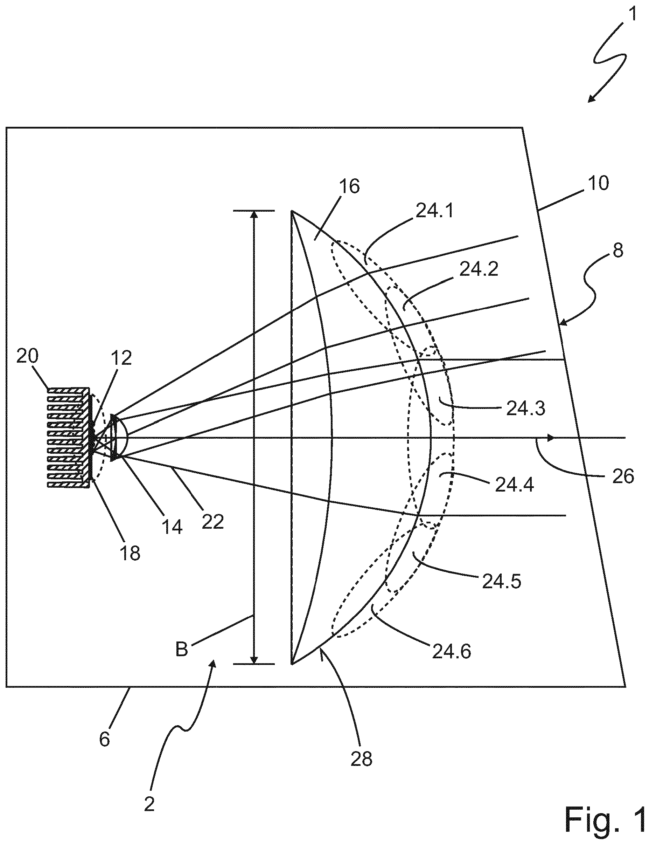

Die Figur 1 zeigt eine Kraftfahrzeugleuchte 1. Die Kraftfahrzeugleuchte 1 umfasst ein Gehäuse 6, dessen Lichtaustrittsöffnung 8 von einer transparenten Abdeckscheibe 10 abgedeckt ist. In dem Gehäuse ist ein Lichtmodul 2 angeordnet, das mehrere getrennt voneinander ansteuerbare Lichtquellen 12, beispielsweise lichtemittierende Dioden (LED), eine Primäroptik 14 und eine Sekundäroptik 16 aufweist. In der dargestellten Ausgestaltung ist eine Zahl n der Lichtquellen gleich = 5. Die Zahl n der Lichtquellen kann aber auch größer oder kleiner als fünf sein.

Die LED sind auf einem ebenen und starren Trägerelement 18, beispielsweise einer Leiterplatte, angeordnet. Neben den LEDs weist das Trägerelement 18 noch andere elektronische Bauteile und Leiterbahnen auf, die zur Steuerung und zur Versorgung der LEDs mit elektrischer Energie dienen. Das Trägerelement 18 steht in thermischem Kontakt mit einem Kühlkörper 20 und leitet die in den Chips der LEDs freiwerdende Wärme in den Kühlkörper ab. Der Kühlkörper 20 ist dazu eingerichtet, die in den elektronischen Bauteilen und insbesondere die in den LEDs während ihres Betriebs entstehende Wärme aufzunehmen und an die Umgebung abzuführen. Dazu weist der Kühlkörper 20 eine möglichst große Oberfläche auf. Die große Oberfläche kann beispielsweise durch Rippen realisiert sein. Die LED bilden zusammen mit dem Trägerelement und dem Kühlkörper eine Baugruppe, die für alle in dieser Anmeldung vorgestellten Ausgestaltungen verwendbar ist. Allerdings ist die Erfindung nicht auf die Verwendung einer solchen Baugruppe beschränkt. Wesentlich ist jeweils, dass mehrere Lichtquellen vorhanden sind, deren Lichtströme unabhängig voneinander aufsteuerbar und absteuerbar sind.

Die Primäroptik 14 ist in Relation zu den Lichtquellen 12 so angeordnet, dass die Primäroptik 14 in der Lage ist, von unterschiedlichen Lichtquellen 12 ausgehende Lichtbündel 22 zu sammeln und in unterschiedliche Zonen 24 der Sekundäroptik 16 zu lenken. Dabei ist jede Zone je einer Lichtquelle zugeordnet, so das sich für n = 5 Lichtquellen n = 5 Zonen 24.1, 24.2, ..., 24.5 ergeben. Die unterschiedlichen Zonen 24 überlappen sich dabei je nach Ausgestaltung vollständig oder teilweise, oder sie grenzen unmittelbar aneinander an, ohne sich dabei zu überlappen. Unter einer vollständigen Überlappung wird hier eine Überlappung verstanden, bei der zwei Zonen eine zwischen ihnen liegende weitere Zone jeweils zur Hälfte überlappen.

Die Sekundäroptik 16 ist dazu eingerichtet und angeordnet, eine von der Primäroptik 14 erzeugt erste Lichtverteilung in eine in einem Vorfeld eines Kraftfahrzeugs liegende zweite Lichtverteilung zu überführen. Eine Abstrahlrichtung 26 der Leuchte 1 ist bei bestimmungsgemäßer Verwendung der Leuchte 1 in einer Kraftfahrzeugbeleuchtungseinrichtung, sei es ein Scheinwerfer oder eine separate Bugleuchte oder Heckleuchte, bevorzugt parallel zur Fahrtrichtung des Kraftfahrzeugs nach vorn oder hinten ausgerichtet. Eine Längsausdehnung B einer Lichtaustrittsfläche 28 der Sekundäroptik 16 erstreckt sich in einer Ausgestaltung bei einer bestimmungsgemäßen Verwendung der Leuchte horizontal und quer zur Fahrtrichtung. Eine Breite oder Höhe der Lichtaustrittsfläche erstreckt sich in der dargestellten Ausgestaltung senkrecht zur Zeichnungsebene. Die angegebene Orientierung dient aber nur zur Veranschaulichung. Die Lichtaustrittsfläche kann im Fahrzeug auch in einer anderen Einbaulage angeordnet sein, wobei eine Länge der Lichtaustrittsfläche aber bevorzugt ein Vielfaches der Breite der Lichtaustrittsfläche ist.

Die Lichtaustrittsfläche der ist bevorzugt eine zusammenhängend erscheinende Fläche, insbesondere die Lichtaustrittsfläche einer Linse oder die Reflexionsfläche eines Reflektors. Eine zusammenhängend erscheinende Fläche ist zum Beispiel auch die Lichtaustrittsfläche einer Fresnellinse, denn deren einzelne Segmente schließen sich lückenlos aneinander an, weil deren Sprünge (Abstände zwischen benachbarten Segmenten) immer parallel zur optischen Achse liegen. Eine Lichtaustrittsfläche 28 der Sekundäroptik 16 weist in der Regel streuende Geometrien auf. Ein Beispiel einer streuenden Geometrie ist ein lokal gegenüber seiner benachbarten Oberflächenumgebung verkipptes Oberflächensegment, das einen dort aus der Lichtaustrittsfläche austretenden Lichtstrahl durch Brechung in eine vorbestimmte Richtung lenkt. Die vorbestimmte Richtung weicht dabei von der Richtung ab, in die neben dem verkippten Oberflächensegment austretendes Licht gebrochen wird. Die Verkippungen können als Grenzflächen von Vertiefungen in der Fläche oder aus der Fläche aufragenden Erhebungen verwirklicht sein. Dadurch wird zum Beispiel paralleles Licht auf die für eine regelkonforme Signallichtverteilung charakteristischen Öffnungswinkel von +/- 10° in vertikaler Richtung und/oder +/- 20° in horizontaler Richtung aufgeweitet, wobei das Winkelpaar 0° in vertikaler Richtung und 0° in horizontaler Richtung mit der Hauptabstrahlrichtung 26 übereinstimmt. Alternativ zu einer solchen Anordnung von Streuelementen in der Lichtaustrittsfläche der Sekundäroptik ist in einer anderen Ausgestaltung ein streuende Geometrien aufweisendes optisches Element in Abstrahlrichtung 26 hinter der Sekundäroptik 16 angeordnet. Bei einem solchen optischen Element handelt es sich zum Beispiel um eine transparente Streuscheibe, die auch mit der Abdeckscheibe 10 identisch sein kann.

Je nachdem, wie die unterschiedlichen Lichtquellen 12 angesteuert werden, erscheinen die unterschiedlichen Zonen 24 heller oder dunkler. Auf diese Weise wird ein Erscheinungsbild der Leuchte 1 dynamisch veränderbar. Es kann insbesondere durch zeitlich versetztes Aufsteuern und Absteuern der Lichtströme jeweils benachbarter Zonen eine Art von Lauflicht verwirklicht werden, das den gewünschten wischenden Eindruck ergibt.

Im Folgenden werden weitere Ausgestaltungen von Lichtmodulen einer erfindungsgemäßen Kraftfahrzeugleuchte beschrieben, die sich durch unterschiedliche Primäroptiken und/oder Sekundäroptiken vom Gegenstand der Figur 1 unterscheiden. Wesentlich ist jeweils, dass die Optik wenigstens eine Primäroptik und eine Sekundäroptik aufweist und die Primäroptik dazu eingerichtet ist, mit einem Lichtstrom einer ersten Lichtquelle der mehreren Lichtquellen einen anderen Teilbereich der Sekundäroptik auszuleuchten als mit einer zweiten Lichtquelle der mehreren Lichtquellen.

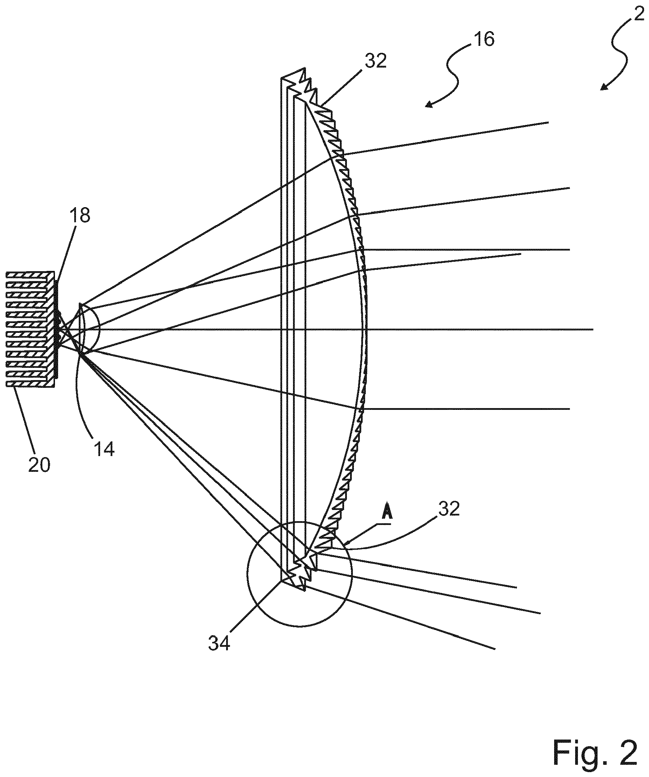

Figur 2 zeigt eine weitere Ausgestaltung eines Lichtmoduls 2. Das in der Figur 2 gezeigte Lichtmodul 2 unterscheidet sich von der in der Figur 1 dargestellten Ausführung darin, dass die Sekundäroptik 16 als Fresnel-Linse ausgeführt ist. Eine Fresnel-Linse ergibt sich aus der Geometrie einer glatten konvexen Linse dadurch, dass letztere in eine Vielzahl von Zonen zerlegt wird. In jeder dieser Zonen ist die Dicke der Fresnel-Linse, also der Abstand zwischen ihrer Lichteintrittsfläche und ihrer Lichtaustrittsfläche, im Vergleich zur Dicke einer glatten konvexen Linse gleichen Durchmessers und gleicher Brennweite, auf deren Geometrie die Fresnel-Linse basiert, verringert. Die Zonen sind auf einer Fläche zusammengeschoben, so dass sie sich in einer Vorderansicht, bei der ein Betrachter entgegengesetzt zur Abstrahlrichtung auf die Linse schaut, auf einer Fläche zusammengeschoben, so dass die Zonen als ringförmige Prismen erscheinen. Die Schnittdarstellung der Fig. 2 zeigt eine Vielzahl von Prismen 32, die jeweils paarweise eine Ringzone definieren. Die Linse 16 besteht in einer Ausgestaltung aus einer Vielzahl solcher konzentrischer Ringzonen, ohne dass die Linsenform auf diese spezielle Kreisform festgelegt ist. Es kommt zum Beispiel auch eine ovale Form oder eine Stadionform in Frage. Bevorzugt stellt jedes Prismenpaar 32 in einer Vorderansicht einer solchen Linse einen geschlossenen Kurvenzug beziehungsweise einen durch zwei geschlossene Kurvenzüge begrenzten Bereich dar. In der dargestellten Ausgestaltung ist die Fläche, auf der die Ringzonen 30 verringerter Dicke parallel zur optischen Achse zusammengeschoben sind, von den Lichtquellen aus gesehen konkav gekrümmt. Dadurch weisen die einzelnen auch als Fresnelzonen bezeichneten Ringzonen ungefähr gleiche Abstände zu den Lichtquellen auf. In einem Querschnitt, in dem die optische Achse der Linse liegt, besitzen die Ringzonen 30 die Form einfacher Prismen 32. Fig. 2 zeigt einen solchen Querschnitt.

Die Ablenkung des Lichts erfolgt beim Durchgang des Lichtes durch die Lichtaustrittsfläche der Fresnel-Linse durch die Brechung des Lichtes beim Übergang des Lichts vom optisch dichteren Medium der Sekundäroptik 16 in das optisch dünnere Medium der Luft. Auf die Lichteintrittsseite tritt das Licht aufgrund der im dargestellten Ausführungsbeispiel konkaven Krümmung der Linse im Wesentlichen senkrecht auf, so dass sich dort keine Richtungsveränderung durch Lichtbrechung ergibt.

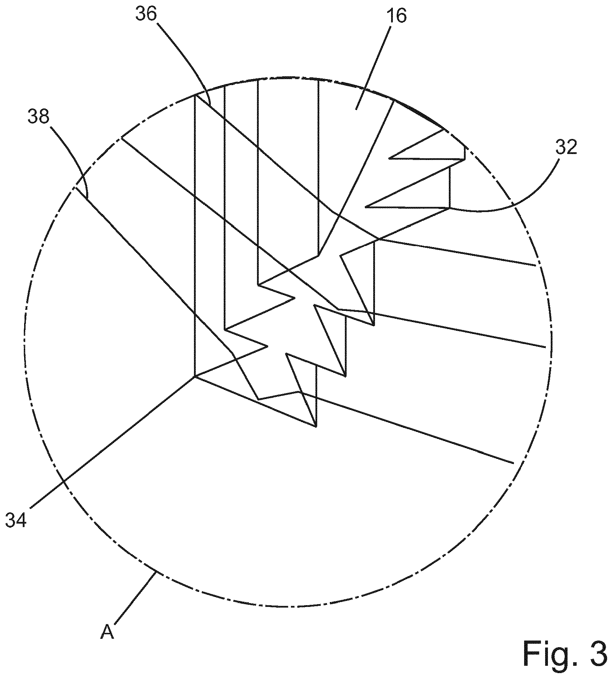

Sind die Ringzonen 30 als doppelte Prismen 34 ausgeführt, wie es im Ausschnitt A der Fig. 2 der Fall ist, ist eine Ablenkung des Lichts durch Brechung und zusätzlich durch interne Totalreflexion möglich. Die Funktionsweise wird nachfolgend anhand der Figur 3 erläutert.
Die Figur 3 zeigt den Ausschnitt A aus der Fig. 2 in vergrößerter Form. Der Ausschnitt A liegt bevorzugt am äußeren Umfang der Fresnel-Linse und damit dort, wo das Licht für eine möglichst parallele Ausrichtung die größte Winkeländerung erfahren muss. Der Ausschnitt A zeichnet sich dadurch aus, dass er im Unterschied zu zentraleren Bereichen der Fresnel-Linse, die nur einfache Prismen 32 aufweisen, auch doppelte Prismen 34 aufweist. Ein solches Doppelprisma besteht aus einem ersten Prisma in der Lichteintrittsfläche und einem zur Lichtumlenkung mit diesem ersten Prisma zusammenwirkenden zweiten Prisma in der Lichtaustrittsfläche der Linse 16.

Ein erster Lichtstrahl 36, der auf das einfache Prisma 32 trifft, wird beim Übergang von der Umgebung in das Prisma 32 und beim Übergang vom Prisma 32 in die Umgebung je einmal und damit insgesamt zweimal gebrochen.

Ein zweiter Lichtstrahl 38, der auf ein doppeltes Prisma 34 trifft, wird beim Übergang von der Umgebung in das Prisma 34 gebrochen und trifft zusätzlich auf eine innere Grenzfläche des doppelten Prismas 34. An der inneren Grenzfläche des doppelten Prismas 34 erfährt der zweite Lichtstrahl 38 eine interne Totalreflexion. Im weiteren Verlauf wird der zweite Lichtstrahl 38 beim Übergang vom doppelten Prisma 34 in die Umgebung erneut gebrochen. Die doppelte Prismen 34 aufweisende Fresnel-Linse stellt somit eine Ausgestaltung einer Sekundäroptik 16 dar, welche das Licht refraktiv und reflexiv in eine regelkonforme Lichtverteilung lenkt.

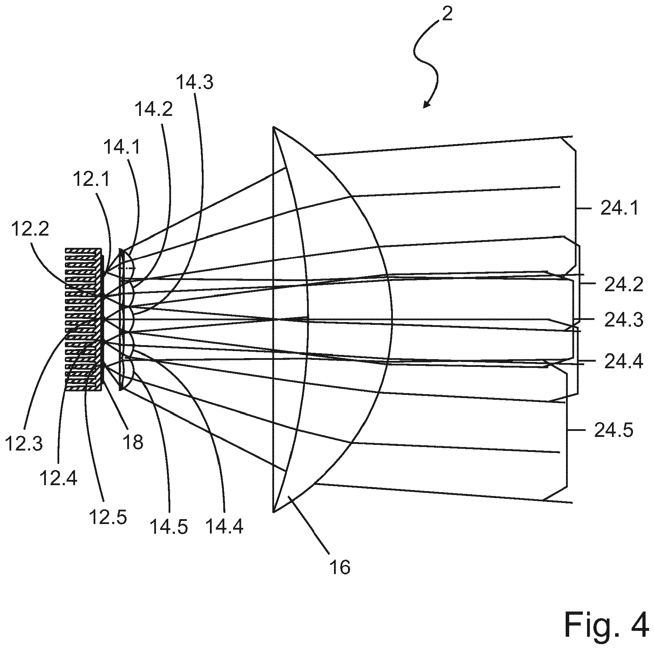

Figur 4 zeigt eine weitere Ausgestaltung des Lichtmoduls 2 . Gegenüber der in der Figur 1 dargestellten Leuchte 1 ist hier jeder der fünf Lichtquellen 12 eine eigene Primäroptik 14 in Form einer Sammellinse zugeordnet. Jede der fünf Primäroptiken 14.n mit n = 1 bis 5 kollimiert das von der ihr jeweils individuell zugeordneten Lichtquelle 12.n ausgehende Lichtbündel und lenkt es in die jeweilige Zone 24.1 bis 24.n der Sekundäroptik 16, die hier eine glatte, konkav-konvexe Sammellinse ist. Aufgrund der konkaven Ausgestaltung der Lichteintrittsfläche der Sammellinse ist der Abstand der Lichteintrittsfläche von den einzelnen Lichtquellen ungefähr gleich.

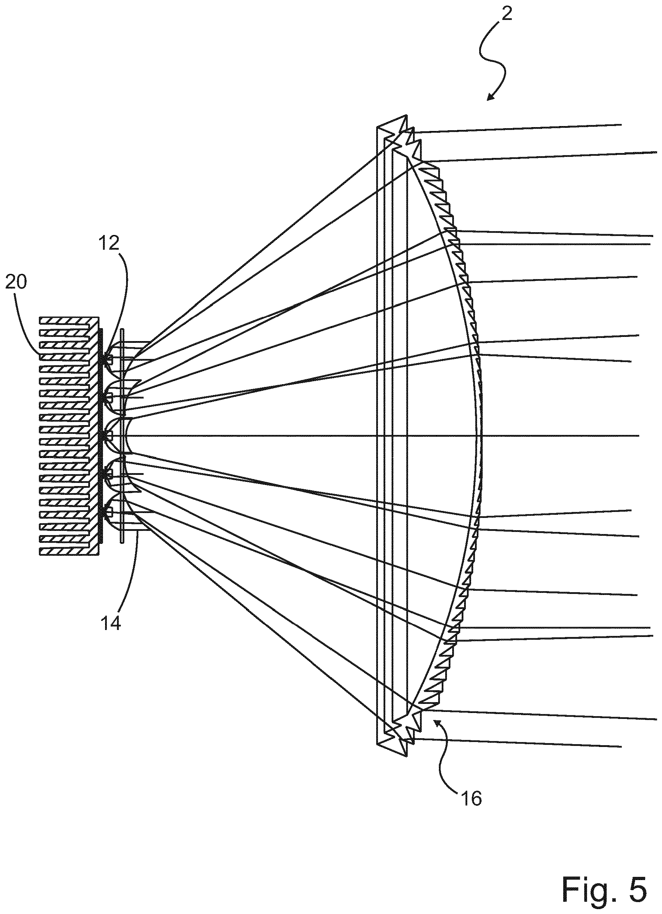

In der Figur 5 ist eine vierte Ausgestaltung dargestellt. Das dort dargestellte Lichtmodul 2 zeichnet sich dadurch aus, dass die Primäroptiken 14 hier durch TIR-Vorsatzoptiken (TIR = total internal reflection) verwirklicht sind. Dabei ist jeder Lichtquelle 12 eine eigene Vorsatzoptik 14 zugeordnet Die Sekundäroptik 16 ist als Fresnel-Linse ausgeführt.

Die Vorsatzoptiken sind transparente Vollkörper, die dazu eingerichtet sind, das in sie eingekoppelte Licht durch Brechung an einer Lichteintrittsfläche und einer Lichtaustrittsfläche sowie durch eine oder mehrere interne Totalreflexionen, die an Seitenwänden stattfinden, .zu bündeln. Die Vorsatzoptiken 40 sind im weitesten Sinne refraktiv-reflexive optische Elemente. Jeder Lichtquelle 12 ist hier also ein interne Totalreflexionen ermöglichender Glaskörper als Primäroptik zugeordnet, der das von der jeweiligen Lichtquelle emittierte Lichtbündel konzentriert und in eine individuell zugeordnete Zone der Sekundäroptik richtet. Der Glaskörper ist in einem zentralen Bereich als Sammellinse ausgeführt. Seine Seitenflächen dienen als totalreflektierende Hohlspiegelflächen, die dort auftreffendes Licht der Lichtquelle zusätzlich bündeln.

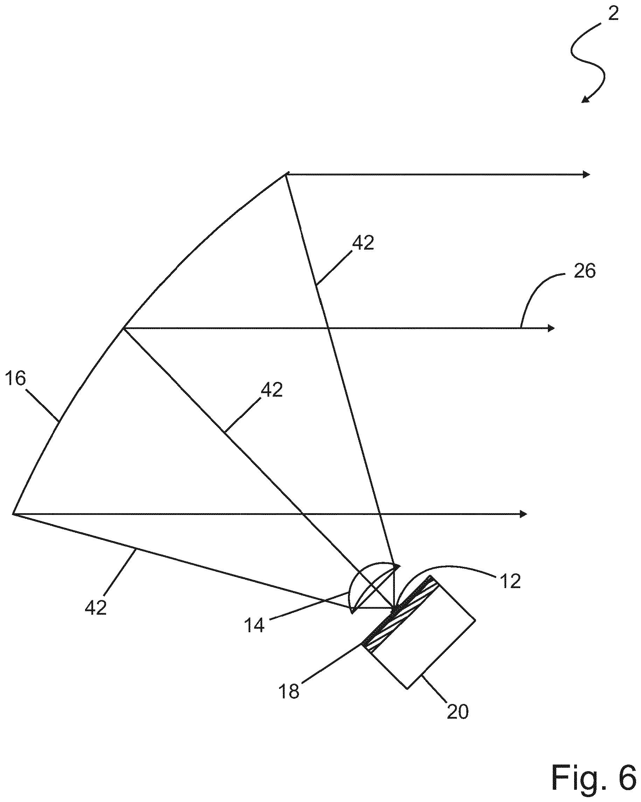

Die Sekundäroptik ist beim Gegenstand der Fig. 5 eine als Fresnel-Linse verwirklichte Sammellinse, die konkav gewölbt ausgeführt ist, wie es weiter oben unter Bezug auf die Fig. 2 beschrieben wird. Grundsätzlich kann jede der in dieser Anmeldung beschriebenen Ausgestaltungen von Primäroptiken mit jeder in dieser Anmeldung beschriebenen Ausgestaltungen einer Sekundäroptik kombiniert werden. Figur 6 zeigt eine fünfte Ausgestaltung eines Lichtmoduls 2 der Leuchte 1. Die Sekundäroptik 16 ist hier als sammelnder Hohlspiegel ausgeführt, auf den von den Lichtquellen 12 ausgehendes Licht einfällt und der durch seine Form und Anordnung dazu eingerichtet ist, das einfallende Licht in die gewünschte Hauptabstrahlrichtung zu reflektieren. Die Leuchte ist hier in einer Seitenansicht dargestellt, bei der die n = 5 Lichtquellen 12 senkrecht zur Zeichnungsebene hintereinander liegen, sodass nur eine Lichtquelle 12 sichtbar ist.

Die Lichtquellen mit der Primäroptik und der als Sekundäroptik dienende Hohlspiegel sind relativ zueinander so angeordnet, dass der Strahlengang 42, in dem Licht von den Lichtquellen in die Hauptabstrahlrichtung 26 gebündelt wird, in der Zeichnungsebene bei der Reflexion an dem Hohlspiegel in einem spitzen Winkel (kleiner 90°) gefaltet wird. Das von den Lichtquellen 12 mit einem Öffnungswinkel größer als Null und damit divergent ausgehende Licht wird von der Primäroptik 14, die in der Figur 6 als Anordnung von Sammellinsen ausgeführt ist, kollimiert und so auf die als Hohlspiegel verwirklichte Sekundäroptik gerichtet, dass jede Lichtquelle 12 eine unterschiedliche Zone 24 der Sekundäroptik 16 beleuchtet. Auch hier gilt, dass die Erläuterungen zur Fig. 1, in der solche unterschiedlichen Zonen 24 explizit dargestellt sind, insofern auf den Gegenstand der Fig. 6 übertragbar sind.

Je nach Ausgestaltung ist jeder Lichtquelle 12 eine eigene Primäroptik 14 zugeordnet, wie es in Fig. 4 dargestellt ist. Alternativ bündelt eine für alle Lichtquellen gemeinsame Primäroptik 14 das von allen Lichtquellen 12 ausgehende Licht und richtet es in die der jeweiligen Lichtquelle 12 zugeordnete Zone 24 der Sekundäroptik 16.

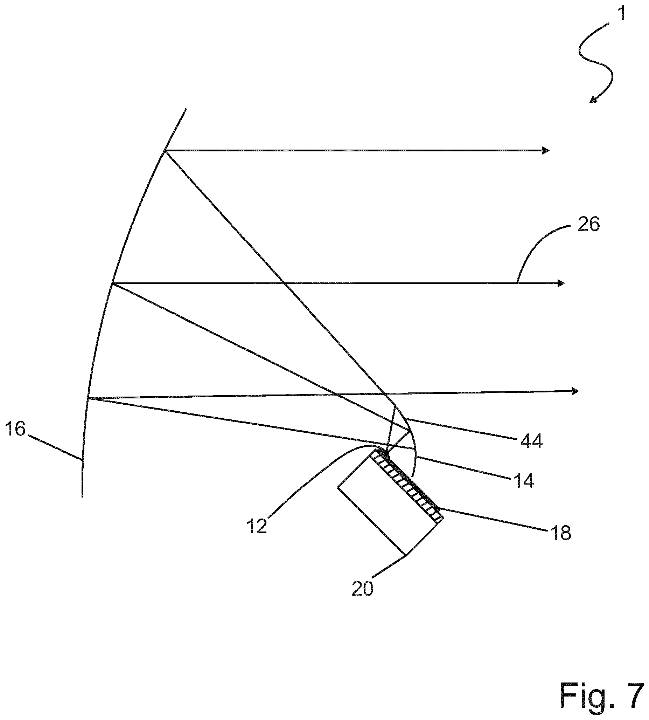

Figur 7 zeigt eine weitere Ausgestaltung eines Lichtmoduls 2 der Leuchte 1. Wie voranstehend unter Bezug auf die Figur 6 beschrieben, ist die Sekundäroptik 16 auch beim Gegenstand der Figur 7 als Hohlspiegel ausgeführt. Im Gegensatz zum Gegenstand der Figur 6 ist in der Figur 7 auch die Primäroptik 14 als sammelnder Hohlspiegel ausgeführt. Die Blickperspektive, in der sich der Gegenstand der Fig. 7 dem Betrachter darstellt, ist die gleiche Blickperspektive wie beim Gegenstand der Fig. 6. Je nach Ausgestaltung ist auch hier jeder Lichtquelle 12 eine eigene Primäroptik 14 zugeordnet, wie es in Fig. 4 dargestellt ist. Alternativ bündelt eine für alle Lichtquellen gemeinsame Primäroptik 14 das von allen Lichtquellen 12 ausgehende Licht und richtet es in die der jeweiligen Lichtquelle 12 zugeordnete Zone 24 der Sekundäroptik 16.Jede Lichtquelle 12 beleuchtet den ihr als Primäroptik zugeordneten Hohlspiegel, sei es ein individuell zugeordneter oder ein für alle Lichtquellen gemeinsamer Hohlspiegel. Der jeweilige als Primäroptik dienende Hohlspiegel 14 kollimiert das Licht und reflektiert es in die der jeweiligen Lichtquelle 12 zugeordnete Zone 24 der Sekundäroptik 16. Beim Gegenstand der Fig. 7 wird der von der Lichtquelle 12 ausgehende Strahlengang in der Zeichnungsebene zweimal in einem spitzen Winkel (kleiner 90°) gefaltet. Ein erstes Mal wird er bei der Reflexion gefaltet, die an der Primäroptik 14 in Richtung der Sekundäroptik 16 erfolgt, und ein zweites Mal wird er von der Sekundäroptik 16 bei der Reflexion gefaltet, mit der das Licht in die Hauptabstrahlrichtung 26 gerichtet wird. Beim Gegenstand der Fig. 7 ist demnach jeder Lichtquelle ein Hohlspiegel als Primäroptik zugeordnet, in dessen erstem Brennpunkt die jeweilige Lichtquelle angeordnet ist und der das von den Lichtquellen emittierte Lichtbündel konzentriert und in jeweils verschiedene Zonen der Sekundäroptik, d.h. in unterschiedliche Richtungen lenkt.

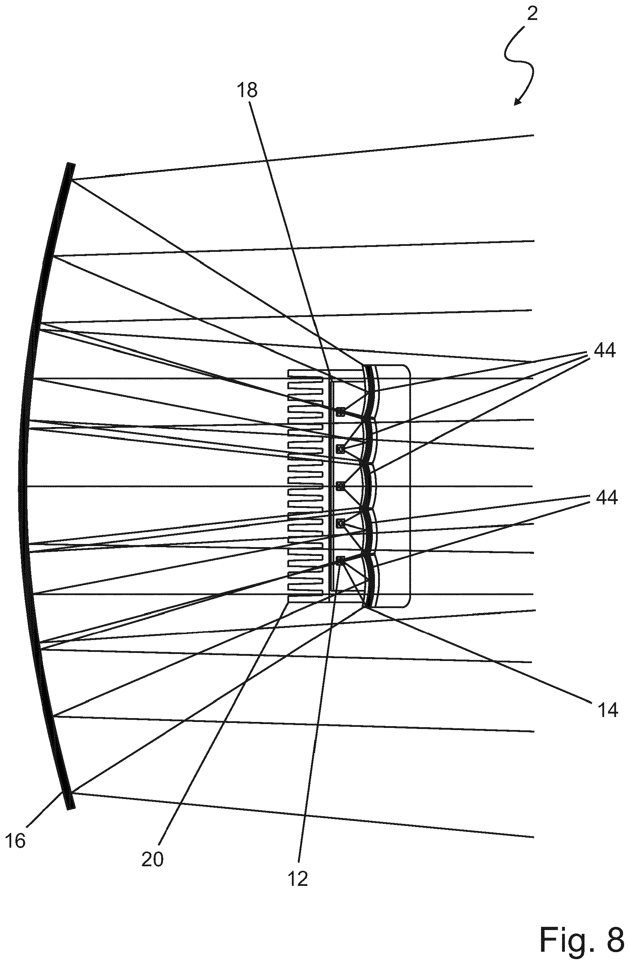

Die Figur 8 zeigt eine Ausgestaltung des Lichtmoduls 2 der Leuchte 1 aus der Figur 7 in einem Schnitt, wobei die Schnittebene horizontal zur Fahrtrichtung und damit senkrecht zur Schnittebene oder Zeichnungsebene der Figur 7 liegt. Die Primäroptik 14 umfasst hier eine Anordnung aus fünf ersten Hohlspiegeln 44, wobei jeder Lichtquelle 12 ein eigener Hohlspiegel zugeordnet ist. Die Lichtquellen 12 bilden auch hier zusammen mit dem Trägerelement 18 und dem Kühlkörper 20 die bereits oben beschriebene Baugruppe.

Von den Lichtquellen 12 ausgehendes Licht fällt auf die ersten Hohlspiegel 44. Jeder erste Hohlspiegel 44 kollimiert das von der ihm zugeordneten Lichtquelle 12 divergent (Öffnungswinkel größer 0) ausgehende Licht und richtet es auf die der Lichtquelle 12 zugeordnete Zone 24 der Sekundäroptik 16. Die ebenfalls als Hohlspiegel ausgeführte Sekundäroptik 16 kollimiert das Licht weiter und reflektiert es in Abstrahlrichtung 26, so dass das Lichtmodul im Vorfeld des Kraftfahrzeugs eine regelkonforme Lichtverteilung erzeugt. Die Figur 8 zeigt damit insbesondere eine Ausgestaltung, bei der jeder Lichtquelle ein Hohlspiegel als Primäroptik zugeordnet ist, in dessen Brennpunkt die jeweilige Lichtquelle angeordnet ist und der das von seiner Lichtquelle emittierte Lichtbündel konzentriert und in eine bestimmte Zone der Sekundäroptik richtet. Verschiedene Zonen der Sekundäroptik werden dabei von verschiedenen Lichtquellen und damit aus unterschiedlichen Richtungen beleuchtet.

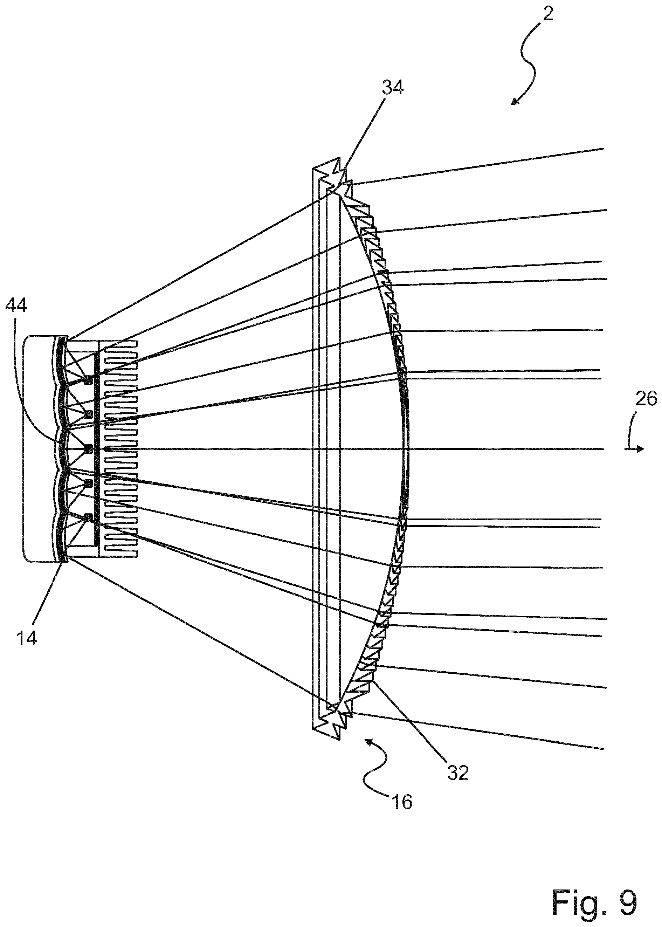

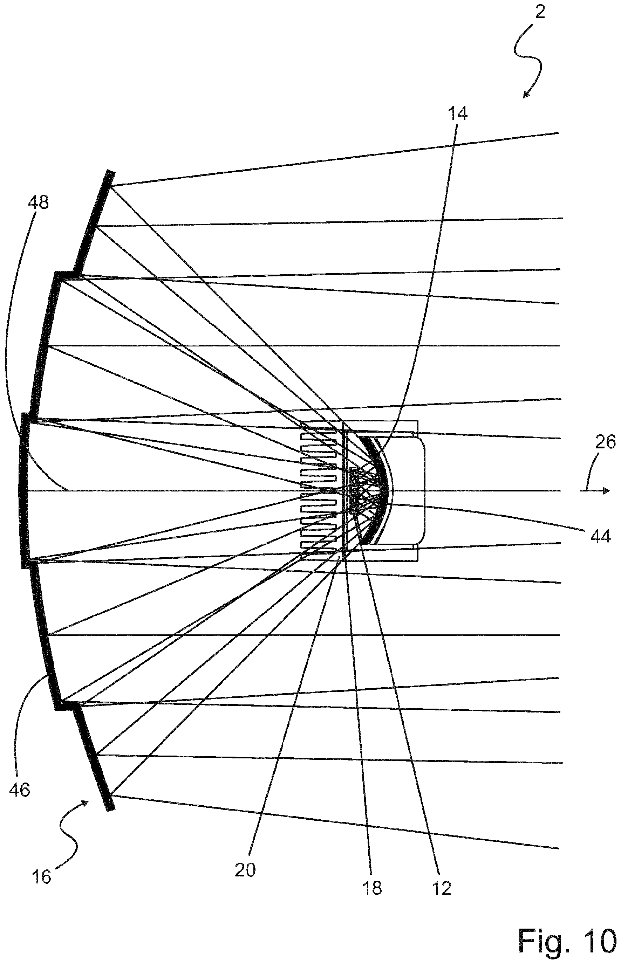

Figur 9 zeigt eine weitere Ausgestaltung eines Lichtmoduls 2 einer Leuchte 1. Das Lichtmodul 2 besitzt eine Primäroptik 14, die eine Anordnung aus fünf ersten Hohlspiegeln 44 aufweist. Jeder Lichtquelle 12 ist ein eigener erster Hohlspiegel 44 als eigene Primäroptik zugeordnet. Die Sekundäroptik 16 ist hier als Fresnel-Linse verwirklicht, wie sie weiter oben unter Bezug auf die Figuren 2 und 3 beschrieben worden ist. Figur 10 zeigt eine weitere Ausgestaltung eines Lichtmoduls 2 einer Leuchte 1. Das Lichtmodul 2 ist dabei in einem horizontal zur Fahrtrichtung liegenden Schnitt dargestellt. Das Lichtmodul 2 weist mehrere Lichtquellen 12 auf, die wieder Teil einer Baugruppe sind, die Lichtquellen, ein Trägerelement und einen Kühlkörper aufweist. Bei der dargestellten Ausgestaltung des Lichtmoduls 2 ist die Sekundäroptik 16 als facettierter Hohlspiegel ausgeführt. Der Hohlspiegel weist fünf Facetten 46 auf. Jede der Facetten 46 ist dazu eingerichtet, das auf sie auftreffende Licht zu kollimieren und in Abstrahlrichtung 26 zu lenken. Die Facetten sind hier in Lichtaustrittsrichtung (die bevorzugt parallel zur Fahrtrichtung liegt) gegeneinander versetzt angeordnet. Der in Abstrahlrichtung 26 gemessene Abstand zwischen den Facetten beeinflusst die Leuchtdichte (Helligkeit) der einzelnen Facetten. Durch eine Variation dieser Abstände beim Entwurf des Hohlspiegels kann die Leuchtdichte der einzelnen Facetten aneinander angeglichen werden. Es ist bevorzugt, dass alle Facetten die gleiche Leuchtdichte aufweisen, weil dies zu einem homogen hellen Erscheinungsbild der Leuchte beiträgt.

Im Detail gilt das Folgende: Ein optischer Weg bezeichnet den Weg, den das Licht von einer Ebene, in der die Lichtquelle 12 liegt, bis zu einer Ebene zurücklegt, in der die regelkonforme Lichtverteilung erzeugt wird.. Die beiden Ebenen stehen in der Regel senkrecht zur Abstrahlrichtung 26, beziehungsweise senkrecht zu einer optischen Achse 48 der Leuchte 1. Es ist vorausgesetzt, dass die Abstrahlrichtung 26 parallel zur optischen Achse 48 liegt. Es ist leicht ersichtlich, dass unter diesen Voraussetzungen der optische Weg für Licht, das einen weit von der optischen Achse 48 entfernt liegenden Teil der Lichtverteilung erzeugt, länger ist, als für Licht, das Bereiche der Lichtverteilung erzeugt, die nahe der optischen Achse 48 liegen.

Ein Abstand der Facetten 46 von der optischen Achse 48 der Leuchte 1 korrespondiert mit einem Abstand derjenigen Lichtquelle 12 von der optischen Achse 24, deren Licht auf die entsprechende Facette 46 fällt. Das bedeutet, dass diejenigen Facetten 46, die nahe der optischen Achse 48 angeordnet sind, von Lichtquellen 12 beleuchtet werden, die ebenfalls nahe der optischen Achse 48 liegen. Facetten 46, die weiter von der optischen Achse 48 entfernt angeordnet sind, werden von Lichtquellen 12 beleuchtet, die weit von der optischen Achse 24 entfernt angeordnet sind.

Die Facetten 46 sind in der Hauptabstrahlrichtung 26 zueinander versetzt angeordnet. Durch Versetzen der Facetten 46 längs der Hauptabstrahlrichtung 26 verändert sich auch der Abstand der Facetten 46 zu der ihr zugeordneten Lichtquelle 12. Diejenigen Facetten 46, die weit von der optischen Achse 48 entfernt angeordnet sind, weisen einen kleineren Abstand zu der ihr zugeordneten Lichtquelle 12 auf, als eine Facette 46, die nahe der optischen Achse 24 angeordnet ist. So wird erreicht, dass der optische Weg von der Lichtquelle 12 zu der Ebene im Vorfeld des Kraftfahrzeugs, in der die regelkonforme Lichtverteilung erzeugt wird, für alle Lichtquellen 12 annähernd gleich ist.

In einer bevorzugten Ausgestaltung werden die Primäroptik und die Sekundäroptik, wenn sie als Reflexionsoptiken verwirklicht sind, als einstückig und stoffschlüssig zusammenhängendes Bauteil hergestellt, was den Justierungsaufwand bei der Montage verringert. Dabei wird die einstückige Primäroptik und Sekundäroptik bevorzugt als ein mit einer metallischen Reflexionsschicht belegtes Kunststoffformteil hergestellt.

In einer alternativ bevorzugten Ausgestaltung wird die einstückige Primäroptik und Sekundäroptik als totalreflektierender Glaskörper - insbesondere aus organischen Gläsern - verwirklicht.

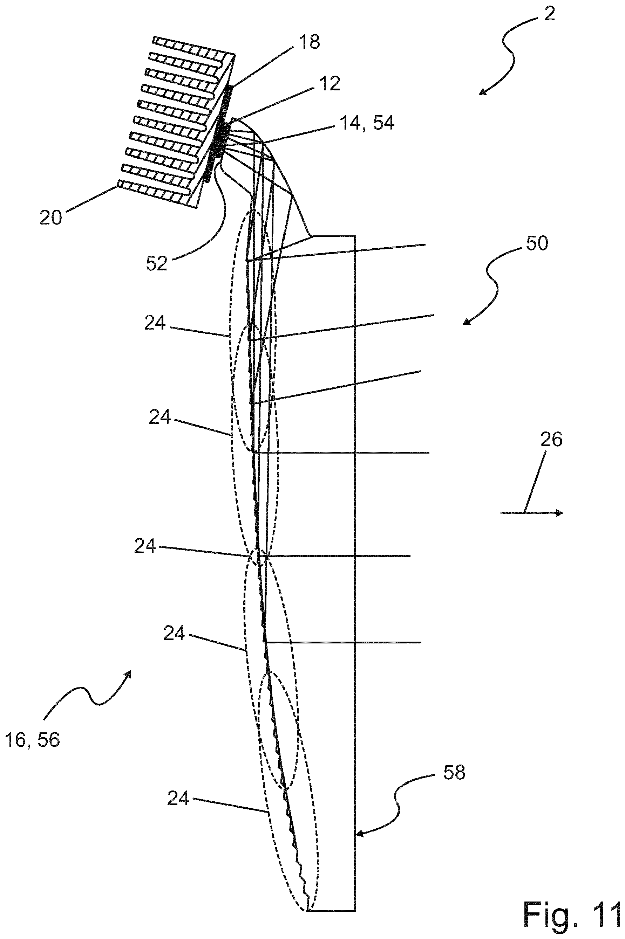

Figur 11 zeigt eine Ausgestaltung des Lichtmoduls 1 einer erfindungsgemäßen Leuchte, bei der die Primäroptik 14 und die Sekundäroptik 16 einstückig und stoffschlüssig in einem transparenten Körper, einem sogenannten Lichtleiter 50 zusammengefasst sind. Der Lichtleiter 50 ist dazu eingerichtet, über eine Einkoppelfläche 52 in sein Volumen eingekoppeltes Licht durch interne Totalreflexion an seinen Grenzflächen zu transportieren.

Die Primäroptik 14 ist als paraboloide Grenzfläche 54 des Lichtleiters 50 verwirklicht. Die Sekundäroptik 16 ist als facettierte Grenzfläche 56 verwirklicht.

Die Lichtquellen 12 bilden zusammen mit dem Trägerelement 18 und dem Kühlkörper 20 wieder die bereits mehrfach erwähnte Baugruppe. Das von den Lichtquellen 12 divergent ausgehende Licht wird über die Lichteintrittsfläche 52 in den Lichtleiter 50 eingekoppelt. Das Licht, das unter Winkeln auf die paraboloide Grenzfläche 54 trifft, die die Bedingungen für interne Totalreflexionen erfüllen, wird in Richtung der facettierten Grenzfläche 56 reflektiert. Die paraboloide Grenzfläche 54 ist so gestaltet, dass das Licht jeder Lichtquelle 12 in eine der jeweiligen Lichtquelle 12 zugeordnete Zone 24 der facettierten Grenzfläche 56 gelenkt wird. Die facettierte Grenzfläche 56 ist dazu eingerichtet, dass auf sie auftreffende Licht so zu reflektieren, dass es an einer gegenüberliegenden Lichtaustrittsfläche 58 die Bedingung für die Totalreflexion verletzt und den Lichtleiter 50 in Austrittsrichtung 26 verlässt, wobei beim Austritt eine Brechung auftritt.

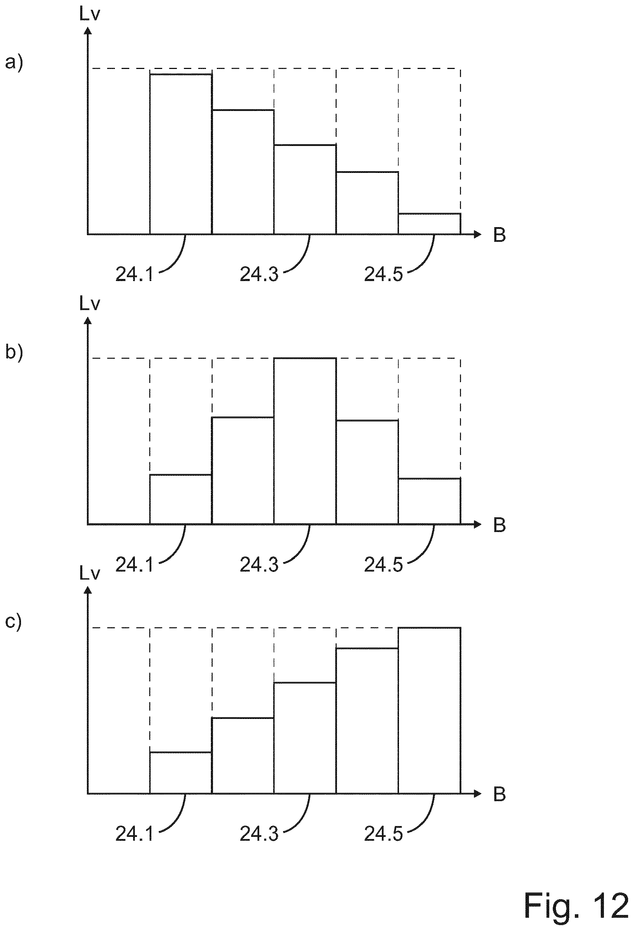

Die nachfolgend näher erläuterten Figuren 12 bis 14 zeigen eine Leuchtdichte Lv aufgetragen über der horizontalen Ausdehnung B der Lichtaustrittsfläche 28. Die Breite B ist dabei aufgeteilt in fünf Zonen 24.i mit i = 1 bis 5.

In der Figur 12 überschneiden sich die fünf Zonen 24.i nicht. Die unterschiedliche Leuchtdichte Lv der fünf Zonen 24 wird durch unterschiedliche Bestromung der den Zonen 24 zugeordneten Lichtquellen 12 erzielt. Die unterschiedliche Lichtdichte ergibt sich also jeweils durch unterschiedlich starkes Aufsteuern der Lichtströme der Lichtquellen. In der Figur 12a liefert die der linken Zone 24.1 zugeordnete Lichtquelle 12.1 den größten Lichtstrom, während die der rechten Zone 24.5 zugeordnete Lichtquelle 12.5 den kleinsten Lichtstrom liefert. Die dazwischen liegenden Lichtquellen liefern von links nach rechts abnehmende Lichtströme.

In der Teilfigur 12b liefert die der mittleren Zone 24.3 zugeordnete Lichtquelle 12.3 den größten Lichtstrom, so dass die Leuchtdichte von links nach rechts betrachtet zunächst ansteigt, ein Maximum erreicht und dann wieder abnimmt.

In der Teilfigur 12c liefern die Lichtquellen Lichtströme, die von links nach rechts ansteigen, so dass sich eine von links nach rechts ansteigende Leuchtdichte ergibt. Man kann die Figuren 12 a bis c als Momentaufnahmen der Leuchtdichte einer Lichtaustrittsfläche der Leuchte lesen. Werden die abgebildeten Leuchtdichten zeitlich nacheinander in einer schnellen Abfolge eingestellt, ergibt sich für einen Betrachter ein quer über die Lichtaustrittsfläche 28 wanderndes Helligkeitsmaximum, was dem erwünschten Wischeffekt entspricht. Dadurch, dass sich die Zonen nicht überlappen, weist jede Zone einen großen Helligkeitsgradienten zu ihren benachbarten Zonen auf. Diese Muster ergeben sich bei einer scharf abbildenden Optik, bei der die Primäroptik eine primäre Lichtverteilung im Abstand einer Brennweite der Sekundäroptik im Lichtweg vor der diese primäre Lichtverteilung scharf abbildenden Sekundäroptik erzeugt.

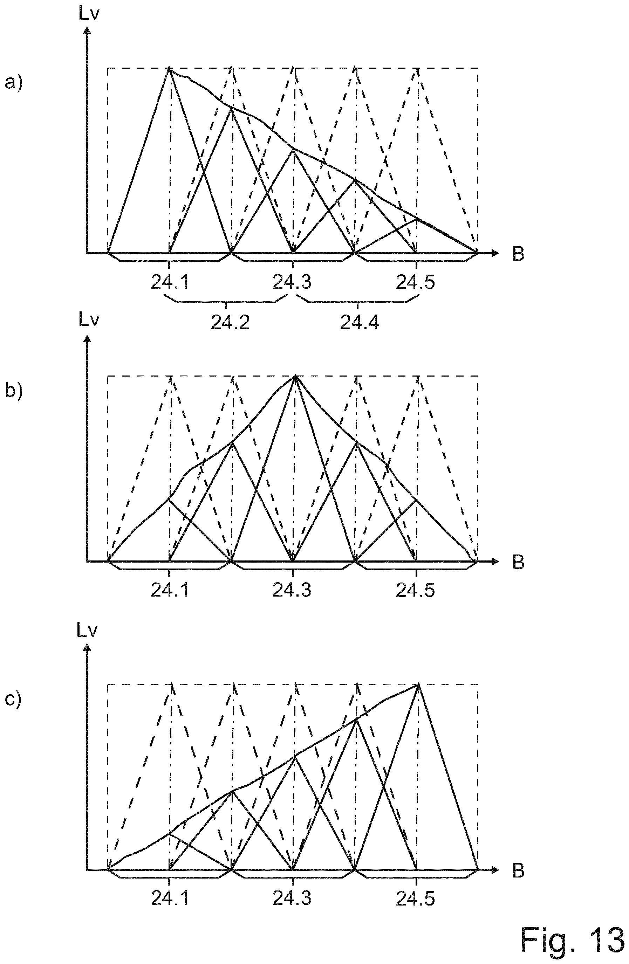

Die Figur 13 zeigt die Leuchtdichte Lv für Zonen 24.1 bis 24.5 wobei die Zonen 24 sich vollständig überlappen. Eine vollständige Überlappung bedeutet hierbei, dass sich zwei Zonen die zwischen ihnen liegende Zone jeweils zur Hälfte überlappen. Die Leuchtdichte Lv jeder einzelnen Zone 24 steigt dabei vom Rand her zu Mitte allmählich an. Dies ist für eine nicht scharf abbildende Optik charakteristisch, bei der sich sozusagen verwaschene, unscharfe Ränder ergeben. Dies ist hier aber durchaus erwünscht, um einen weichen Wischeffekt ohne große Helligkeitsgradienten zu erzielen. Außerdem steigt die Leuchtdichte natürlich bei einer Aufsteuerung des Lichtstroms der ihr zugeordneten Lichtquelle 24 insgesamt und damit sowohl an den Rändern als auch in der Mitte der zugeordneten Zone der Sekundäroptik an.

Steuert man, analog zur Figur 12 zunächst den Lichtstrom der der linken Zone 24.1 zugeordneten Lichtquelle 12.1 am stärksten auf und lässt das Helligkeitsmaximum von der linken Zone 24.1 (Teilfigur a) über die mittlere Zone 24.3 (Teilfigur b) zur rechten Zone (Teilfigur c) wandern, ergeben sich die in den Figuren 13a bis 13c gezeigten Leuchtdichten Lv. Die durchgezogen dargestellten Dreiecke über den einzelnen Zonen 24.1, 24, 2, 24,3,... zeigen die jeweils herrschende Leuchtdichte Lv der einzelnen Zonen an, die jeweils von den Rändern zur Mitte hin linear ansteigt. Die gestrichelt dargestellten Dreiecke über den einzelnen Zonen 24.1, 24, 2, 24,3,... zeigen die jeweils maximal mögliche Leuchtdichte Lv der einzelnen Zonen an, die sich ergibt, wenn (nur) der Lichtstrom der zugehörigen Lichtquelle voll aufgesteuert ist. Das durchgezogen dargestellte große Dreieck, dessen Basis sich über die gesamte Breite der Zonen 24.1 bis 24.5 erstreckt, stellt die über die Zonen aufsummierte Leuchtdichte Lv dar. Es ist erkennbar, dass zwischen benachbarten Zonen nur geringfügige Helligkeitsgradienten bestehen. Es entsteht für den Betrachter ein besonders weicher Übergang von hell leuchtenden Bereichen zu dunklen Bereichen.

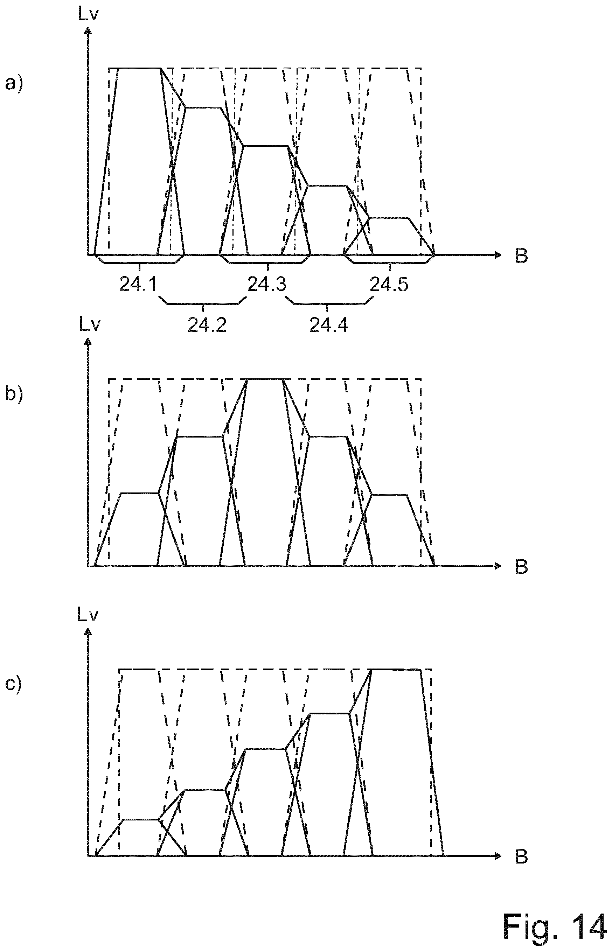

Figur 14 zeigt die Leuchtdichte Lv für Zonen 24 die sich teilweise überlappen. Die jeweilige Bedeutung der durchgezogen und gestrichelt dargestellten Verläufe ergibt sich in Analogie zur Fig. 13. Die Leuchtdichte für eine einzelne beleuchtete Zone 24 nimmt in einem Überlappungsbereich vom Rand der Zone 24 her linear bis zu einem Maximalwert zu. Der Maximalwert stellt sich einem Bereich der Zone 24 ein, der nicht von benachbarten Zonen 24 überlappt ist. Der Maximalwert ist von der Aufsteuerung des Lichtstroms der zugeordneten Lichtquelle 12 abhängig. Insgesamt ergibt sich für eine einzelne beleuchtete Zone 24 eine trapezförmige Verteilung der Leuchtdichte Lv

Die Helligkeitsgradienten zwischen unterschiedlich bestromten Zonen 24 sind geringer als bei vollständig getrennten Zonen 24 entsprechend der Figur 12, jedoch nicht so klein wie die Helligkeitsgradienten zwischen sich vollständig überlappenden Zonen 24 gemäß Figur 13.

Durch geeignete Wahl der Größe der Überlappungsbereiche 60 sind die Helligkeitsgradienten einstellbar.
Für kleine oder keine Überlappungsbereiche entsteht beim Betrachter ein harter Übergang von hell leuchtenden Bereichen zu dunklen Bereichen. Große Überlappungsbereiche oder vollständige Überlappung der Zonen 24 führen zu weichen Übergängen zwischen hellen und dunklen Bereichen. Die hellen und dunklen Bereiche sind nicht scharf voneinander getrennt wahrnehmbar.

## Patentansprüche

1. Kraftfahrzeugleuchte (1) mit mehreren Lichtquellen (12), deren Lichtströme unabhängig voneinander aufsteuerbar und absteuerbar sind, und mit einer Optik (14, 16), die dazu eingerichtet ist, aus den gemeinsam aufgesteuerten Lichtströmen der Lichtquellen eine regelkonforme Lichtverteilung zu erzeugen, **dadurch gekennzeichnet, dass** die Optik wenigstens eine Primäroptik (14) und eine Sekundäroptik (16) aufweist und dass die Primäroptik dazu eingerichtet ist, mit einem Lichtstrom einer ersten Lichtquelle der mehreren Lichtquellen einen anderen Teilbereich der Sekundäroptik auszuleuchten als mit einer zweiten Lichtquelle der mehreren Lichtquellen, wobei die Lichtquellen und die wenigstens eine Primäroptik dazu eingerichtet und angeordnet sind, unterschiedlich orientierte, insbesondere voneinander verschiedene Hauptabstrahlrichtungen aufweisende Lichtbündel zu erzeugen, die voneinander verschiedene, sich paarweise überlappende Bereiche der Sekundäroptik ausleuchten, wobei die Brennweite der Sekundäroptik größer als die Brennweite der Primäroptik ist, der Abstand der Primäroptik von der Sekundäroptik geringer als die Brennweite der Sekundäroptik ist, die Lichtquelle zwischen der Primäroptik und deren objektseitigen Brennpunkt platziert ist, so dass folglich ein virtuelles Lichtquellenbild entsteht, und wobei die Sekundäroptik auf das virtuelle Lichtquellenbild fokussiert ist.

2. Kraftfahrzeugleuchte (1) nach vorangehendem Anspruch 1, **dadurch gekennzeichnet, dass** den mehreren Lichtquellen (12) eine gemeinsame Primäroptik (14) zugeordnet ist, die das von jeder Lichtquelle (12) ausgehende Lichtbündel (22) kollimiert und in eine der jeweiligen Lichtquelle (12) zugeordnete Zone (24) der Sekundäroptik (16) richtet.

3. Kraftfahrzeugleuchte (1) nach vorangehendem Anspruch 1, **dadurch gekennzeichnet, dass** jeder einzelnen der mehreren Lichtquellen (12) eine eigene Primäroptik (14) zugeordnet ist, die das von der jeweiligen Lichtquelle (12) ausgehende Lichtbündel (22) kollimiert und in eine jeweilige Zone (24) der Sekundäroptik (16) lenkt.

4. Kraftfahrzeugleuchte (1) nach einem der vorangehenden Ansprüche, **dadurch gekennzeichnet, dass** die Primäroptik (14) als Fresnel-Linse ausgeführt ist.

5. Kraftfahrzeugleuchte (1) nach vorangehendem Anspruch 3, **dadurch gekennzeichnet, dass** jeder der Lichtquellen (12) eine eigene Primäroptik (14) zugeordnet ist, die als Lichtleiter ausgeführt ist.

6. Kraftfahrzeugleuchte (1) nach einem der vorangehenden Ansprüche, **dadurch gekennzeichnet, dass** die Sekundäroptik (16) als Reflexionsoptik ausgeführt ist.

7. Kraftfahrzeugleuchte (1) nach einem der vorangehenden Ansprüche, **dadurch gekennzeichnet, dass** die Sekundäroptik (16) Facetten (46) aufweist.

8. Kraftfahrzeugleuchte (1) nach einem der vorangehenden Ansprüche 1 bis 6 **dadurch gekennzeichnet, dass** die Sekundäroptik (16) als Sammellinse ausgeführt ist.

9. Kraftfahrzeugleuchte (1) nach vorangehendem Anspruch 8, **dadurch gekennzeichnet, dass** die Sekundäroptik als Fresnel-Linse ausgeführt ist.

10. Kraftfahrzeugleuchte(1) nach vorangehendem Anspruch 8, **dadurch gekennzeichnet, dass** die Sekundäroptik als Fresnellinse ausgeführt ist, die doppelte Prismen (34) aufweist.

11. Kraftfahrzeugleuchte (1) nach einem der vorangehenden Ansprüche 1 bis 3, **dadurch gekennzeichnet, dass** die Primäroptik (14) und die Sekundäroptik (16) als Reflexionsoptiken ausgeführt sind.

12. Kraftfahrzeugleuchte (1) nach vorangehendem Anspruch 5, **dadurch gekennzeichnet, dass** die Sekundäroptik (16) als Lichtleiter ausgeführt ist.

13. Kraftfahrzeugleuchte (1) nach Anspruch 6 oder 7, **dadurch gekennzeichnet, dass** eine in Abstrahlrichtung (26) weisende Oberfläche der Sekundäroptik (16) torische oder toroide Spiegelflächen aufweist, die dazu geeignet sind, Licht, das von der Oberfläche reflektiert wird gemäß den gesetzlichen Vorgaben zu lenken.

14. Kraftfahrzeugleuchte (1) nach einem der vorangehenden Ansprüche, **dadurch gekennzeichnet, dass** in einem Strahlengang (42) nach der Sekundäroptik (16) eine Streuscheibe angeordnet ist.

15. Kraftfahrzeugleuchte (1) nach einem der vorangehenden Ansprüche, **dadurch gekennzeichnet, dass** die Leuchte mehrere verschiedenfarbige Lichtquellen umfasst.

## Claims

1. Motor vehicle lamp (1) having a plurality of light sources (12), the luminous fluxes of which can be opened and closed independently of one another, and having an optics (14, 16) which is set up to produce a light distribution in conformity with the regulations from the jointly opened luminous fluxes of the light sources, **characterised in that** the optics has at least one primary optics (14) and one secondary optics (16), and **in that** the primary optics is set up to illuminate a different partial area of the secondary optics system with a luminous flux of a first light source of the plurality of light sources than with a second light source of the plurality of light sources, wherein the light sources and the at least one primary optics are set up and arranged to produce differently oriented light beams, in particular having different main radiation directions, which illuminate different areas of the secondary optics overlapping in pairs, wherein the focal length of the secondary optics is greater than the focal length of the primary optics, the distance of the primary optics from the secondary optics is less than the focal length of the secondary optics, the light source is placed between the primary optics and its object-side focal point so that a virtual light source image is created, and wherein the secondary optics is focused on said virtual light source image.

2. Motor vehicle lamp (1) according to preceding claim 1, **characterised in that** a common primary optics (14) is assigned to the several light sources (12), which collimates the light beam (22) emanating from each light source (12) and directs it into a zone (24) of the secondary optics (16) assigned to the respective light source (12).

3. Motor vehicle lamp (1) according to preceding claim 1, **characterised in that** each individual one of the several light sources (12) is assigned its own primary optics (14) which collimates the light beam (22) emanating from the respective light source (12) and directs it into a respective zone (24) of the secondary optics (16).

4. Motor vehicle lamp (1) according to one of the preceding claims, **characterised in that** the primary optics (14) is designed as a Fresnel lens.

5. Motor vehicle luminaire (1) according to preceding claim 3, **characterised in that** each of the light sources (12) is assigned its own primary optics (14) which is designed as a light guide.

6. Motor vehicle lamp (1) according to one of the preceding claims, **characterised in that** the secondary optics (16) is designed as a reflection optics.

7. Motor vehicle lamp (1) according to one of the preceding claims, **characterised in that** the secondary optics (16) has facets (46).

8. Motor vehicle lamp (1) according to one of the preceding claims 1 to 6, **characterised in that** the secondary optics (16) is designed as a convergent lens.

9. Motor vehicle lamp (1) according to preceding claim 8, **characterised in that** the secondary optics is designed as a Fresnel lens.

10. Motor vehicle lamp (1) according to preceding claim 8, **characterised in that** the secondary optics is designed as a Fresnel lens which has double prisms (34).

11. Motor vehicle lamp (1) according to one of the preceding claims 1 to 3, **characterised in that** the primary optics (14) and the secondary optics (16) are designed as reflection optics.

12. Motor vehicle lamp (1) according to preceding claim 5, **characterised in that** the secondary optics (16) are designed as light guides.

13. Motor vehicle lamp (1) according to claim 6 or 7, **characterised in that** a surface of the secondary optics (16) pointing in the direction of radiation (26) has toric or toroidal mirror surfaces which are suitable for directing light reflected from the surface in accordance with the legal requirements.

14. Motor vehicle lamp (1) according to one of the preceding claims, **characterised in that** a diffusing lens is arranged in a beam path (42) after the secondary optics (16) .

15. Motor vehicle lamp (1) according to one of the preceding claims, **characterised in that** the lamp comprises several light sources of different colours.

## Revendications

1. Lampe de véhicule automobile (1) comprenant une pluralité de sources de lumière (12) dont les flux lumineux peuvent être commandés en agrandissement et commandés en réduction indépendamment les uns des autres, et comprenant une optique (14, 16) qui est conçue pour générer une distribution de lumière conforme aux règles à partir des flux lumineux des sources de lumière, qui sont commandés ensemble en agrandissement, **caractérisée par le fait que** l'optique comprend au moins une optique primaire (14) et une optique secondaire (16) et que l'optique primaire est conçue pour éclairer avec un flux lumineux provenant d'une première source de lumière de la pluralité de sources de lumière une autre sous-zone de l'optique secondaire qu'avec une deuxième source de lumière de la pluralité de sources de lumière, dans lequel les sources de lumière et ladite au moins une optique primaire sont conçues et agencées pour générer des faisceaux lumineux qui présentent des directions d'émission principales orientées différemment, en particulier différentes les unes des autres, et qui éclairent des zones différentes les unes des autres et se chevauchant par paires de l'optique secondaire, la distance focale de l'optique secondaire étant supérieure à la distance focale de l'optique primaire, la distance entre l'optique primaire et l'optique secondaire étant inférieure à la distance focale de l'optique secondaire, la source de lumière étant placée entre l'optique primaire et son point focal côté objet, de sorte que, par conséquent, une image de source de lumière virtuelle est créée, et l'optique secondaire étant focalisée sur l'image de source de lumière virtuelle.

2. Lampe de véhicule automobile (1) selon la revendication 1 précédente, **caractérisée par le fait qu'**à la pluralité de sources de lumière (12) est associée une optique primaire (14) commune qui collimate le faisceau lumineux (22) émanant de chaque source de lumière (12) et oriente celui-ci dans une zone (24) de l'optique secondaire (16), qui est associée à la source de lumière (12) respective.

3. Lampe de véhicule automobile (1) selon la revendication 1 précédente, **caractérisée par le fait qu'**à chacune de la pluralité de sources de lumière (12) est associée une propre optique primaire (14) qui collimate le faisceau lumineux (22) émanant de la source de lumière (12) respective et dirige celui-ci dans une zone (24) respective de l'optique secondaire (16).

4. Lampe de véhicule automobile (1) selon l'une quelconque des revendications précédentes, **caractérisée par le fait que** l'optique primaire (14) est réalisée en tant que lentille de Fresnel.

5. Lampe de véhicule automobile (1) selon la revendication 3 précédente, **caractérisée par le fait qu'**à chacune des sources de lumière (12) est associée une propre optique primaire (14) qui est conçue en tant que guide de lumière.

6. Lampe de véhicule automobile (1) selon l'une quelconque des revendications précédentes, **caractérisée par le fait que** l'optique secondaire (16) est réalisée en tant qu'optique de réflexion.

7. Lampe de véhicule automobile (1) selon l'une quelconque des revendications précédentes, **caractérisée par le fait que** l'optique secondaire (16) présente des facettes (46).

8. Lampe de véhicule automobile (1) selon l'une quelconque des revendications précédentes 1 à 6, **caractérisée par le fait que** l'optique secondaire (16) est réalisée en tant que lentille convergente.

9. Lampe de véhicule automobile (1) selon la revendication 8 précédente, **caractérisée par le fait que** l'optique secondaire est réalisée en tant que lentille de Fresnel.

10. Lampe de véhicule automobile (1) selon la revendication 8 précédente, **caractérisée par le fait que** l'optique secondaire est réalisée en tant que lentille de Fresnel qui présente des doubles prismes (34).

11. Lampe de véhicule automobile (1) selon l'une quelconque des revendications 1 à 3 précédentes, **caractérisée par le fait que** l'optique primaire (14) et l'optique secondaire (16) sont réalisées en tant qu'optiques de réflexion.

12. Lampe de véhicule automobile (1) selon la revendication 5 précédente, **caractérisée par le fait que** l'optique secondaire (16) est réalisée en tant que guide de lumière.

13. Lampe de véhicule automobile (1) selon la revendication 6 ou 7, **caractérisée par le fait qu'**une surface de l'optique secondaire (16), qui montre dans la direction d'émission (26) présente des surfaces miroirs toriques ou toroïdales qui sont aptes à diriger selon les exigences légales la lumière qui est réfléchie par la surface.

14. Lampe de véhicule automobile (1) selon l'une quelconque des revendications précédentes, **caractérisée par le fait qu'**un diffuseur est disposé dans un trajet des rayons (42) en aval de l'optique secondaire (16).

15. Lampe de véhicule automobile (1) selon l'une quelconque des revendications précédentes, **caractérisée par le fait que** la lampe comprend une pluralité de sources de lumière à couleurs différentes.
